(19) Europäisches Patentamt
European Patent Office
Office européen des brevets

(11) **EP 0 690 973 B1**

(12) **EUROPEAN PATENT SPECIFICATION**

(45) Date of publication and mention
of the grant of the patent:
**07.01.1998 Bulletin 1998/02**

(21) Application number: **93908518.9**

(22) Date of filing: **22.03.1993**

(51) Int Cl.6: **G01C 19/70**

(86) International application number:
**PCT/US93/02698**

(87) International publication number:
**WO 94/21987 (29.09.1994 Gazette 1994/22)**

(54) **LASER GYRO DIRECT DITHER DRIVE**

SCHWINGBEWEGUNGSANTRIEB FÜR LASERKREISEL

ENTRAINEMENT DIRECT DE SYSTEME D'ACTIVATION DE GYROLASER

(84) Designated Contracting States:
**DE FR GB**

(43) Date of publication of application:
**10.01.1996 Bulletin 1996/02**

(73) Proprietor: **HONEYWELL INC.**
**Minneapolis Minnesota 55408 (US)**

(72) Inventors:
• **FRITZE, Keith, R.**
**Orono, MN 55356 (US)**
• **KILLPATRICK, Joseph, E.**
**Minneapolis, MN 55418 (US)**

• **BERNDT, Dale, F.**
**Plymouth, MN 55441 (US)**

(74) Representative: **Herzbach, Dieter, Dipl.-Ing. et al**
**Honeywell Holding AG**
**Patent- und Lizenzabteilung**
**Postfach 10 08 65**
**63008 Offenbach (DE)**

(56) References cited:
**EP-A- 0 069 366**        **EP-A- 0 069 367**
**WO-A-91/06828**          **US-A- 5 225 889**

## Description

This invention relates generally to laser gyros and, more particularly, to a method and apparatus for direct digital drive of a laser gyro dither motor using a microcontroller in a closed loop system.

## BACKGROUND OF THE INVENTION

Laser angular rate sensors, often also called laser gyros, are well known. One example of a laser angular rate sensor is US Patent No. 4,751,718 issued to Hanse, et al.. Present day laser angular rate sensors include a thermally and mechanically stable laser block having a plurality of formed cavities for enclosing a gap. Mirrors are placed at the extremities of the cavities for reflecting laser beams and providing an optical closed-looped path.

Associated with such sensors is an undesirable phenomenon called lock-in which has been recognized for some time in the prior art. In the prior art, the lock-in phenomenon has been addressed by rotationally oscillating or dithering such sensors. The rotational oscillation is typically provided by a dither motor. Dither motors of the prior art usually have a suspension system which includes, for example, an outer rim, a central hub member and a plurality of dither motor reeds which project radially from the hub member and are connected between the hub member and the rim. Conventionally, a set of piezoelectric elements which serve as an actuator is connected to the suspension system. When actuated through the application of an electrical signal to the piezoelectric elements, the suspension system operates as a dither motor which causes the block of the sensor to oscillate angularly at the natural mechanical resonant frequency of the suspension system. This dither motion is superimposed upon the inertial rotation of the sensor in inertial space. Such dither motors may be used in connection with a single laser gyro, or to dither multiple laser gyros. The prior art includes various approaches to recover inertial rotation data free from dither effects.

## SUMMARY OF THE INVENTION

A direct digital dither drive apparatus and method for a laser gyro is provided by the present invention as claimed. The direct digital drive apparatus of an embodiment of the invention comprises a low pass filter having at least three poles, a high pass filter having at least two poles, an output for providing a filtered signal and an input connected to a pulse width modulated digital drive signal. The direct digital drive further comprises an amplifier for amplifying the filtered signal from the low pass filter wherein the amplifier is coupled at an input to the output of the low pass filter and a means for driving the dither motor in response to the amplified signal is coupled to the amplifier output, wherein the driving means includes an active pull-up means including means for providing a dead band operating characteristic so as to substantially eliminate current spikes on the power supply signal and provide a highly efficient driver that consumes low power.

It is one object of the invention to provide a dither motor driving means which provides an output in the range of +150 to - 150 volts in response to a pulse width modulation input ranging from 0 % to 100 % duty cycle.

It is a further object of the invention to provide an improved dither drive circuit that consumes power only during transitions of the pulse width modulated signal input.

It is yet another object of the invention to provide an improved dither drive circuit that consumes a small amount of power when the capacitive driving load of the dither motor reaches steady state.

Other objects, features and advantages of the present invention will become apparent to those skilled in the art through the Description of the Preferred Embodiment, Claims, and drawings herein wherein like numerals refer to like elements.

## BRIEF DESCRIPTION OF THE DRAWINGS

Figure 1 shows a block diagram of one embodiment of a laser gyro employing the novel features of the present invention.

Figure 2 schematically shows a circuit diagram of one example of a dither pickoff circuit made in accordance with the present invention.

Figure 3 schematically shows a circuit diagram of one embodiment of a direct digital dither drive circuit as provided by one aspect of the invention.

Figure 4 shows a detailed circuit diagram of an alternate embodiment of a dither drive circuit as provided by one aspect of the invention.

Figure 5 shows a high level schematic block diagram of the direct dither drive used in a laser gyro including the closed loop system.

Figure 6 shows a interrupt timing diagram as a function of the output of the zero crossing detector.

Figure 7 shows a method of determining the 90° and 270° crossing points of the dither cycle.

Figure 8 shows a schematic representation of the method and apparatus of the invention used to arbitrate a single analog to digital converter between a multiple number of other modular gyro functions.

Figure 9 shows the method of monitoring the modular gyro with the monitor control loop.

Figure 10 shows a method of processing a dither pickoff signal that has been digitized and converted from a dither pickoff.

Figure 11 shows a schematic diagram of the method of handling an A/D conversion when called by either the drive and the stripper and the background processes.

Figure 12 shows a schematic diagram of the interrupt service routine for the software timer interrupt.

Figure 13 shows the method of the invention used to predict the sample strobe.

Figure 14 shows the method of the invention utilizing multiple analog to digital converters.

Figure 15 shows the method of the invention to queue a background analog to digital conversion.

## DESCRIPTION OF THE PREFERRED EMBODIMENT

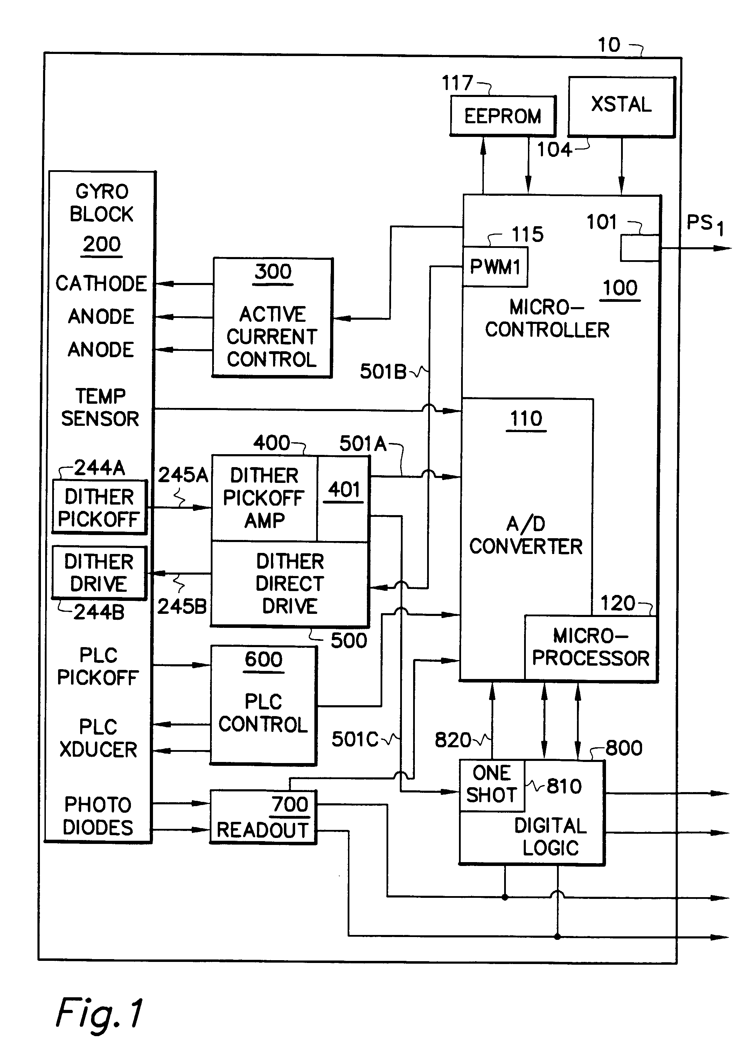

Referring now to Figure 1 which shows a block diagram of one embodiment of a modular laser gyro employing the novel features of the present invention. The instant invention will be explained by way of example embodiments. Those skilled in the art having the benefit of this disclosure will appreciate that the examples herein are by way of illustration of the principles of the invention and not by way of limitation. Laser gyro 10 includes a controller 100, a laser gyro block 200, an active current control 300, dither pickoff amplifier 400, direct digital dither drive 500, a path length control (PLC) device 600, a readout 700, and digital logic 800.

The direct digital dither drive of the invention is implemented with a microcontroller serving as controller 100. The dither drive is a closed loop system comprising a dither pickoff 244A, dither pickoff amplifier circuit 400, A/D converter 110, controller 100, PWM1 115 output line 501B, direct dither drive 500 and dither motor 244B. The A/D converter 110 may be integral to the controller and may advantageously be a 10 - bit A/D converter. The 10 - bit A/D converter provides ten bits of accuracy for the dither stripper method and apparatus discussed in more detail in applicants' co-pending PCT application "LASER GYRO DITHER STRIPPER" based upon U.S. Serial No. 07/805,122 filed 11 December 1992 (WO-A-94/21986). The controller 100 may also advantageously include a microprocessor 120. The controller 100 has a processor 120 core with hardware peripheral support that provides highly reliable, cost effective and highly integrated control functions.

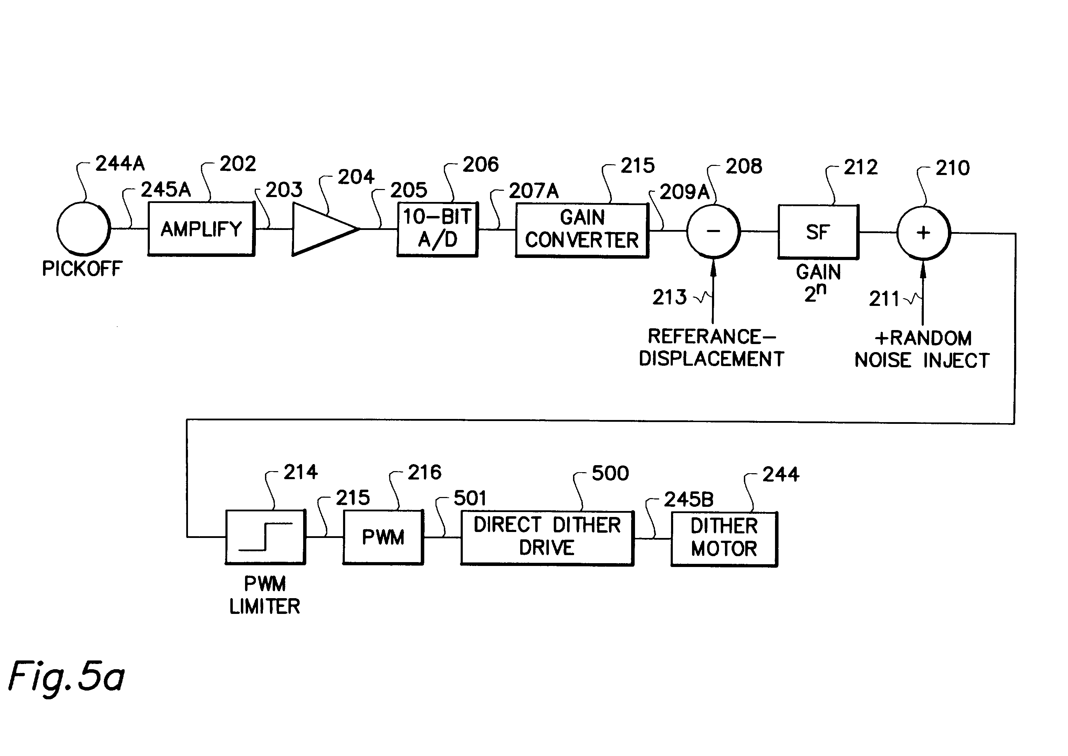

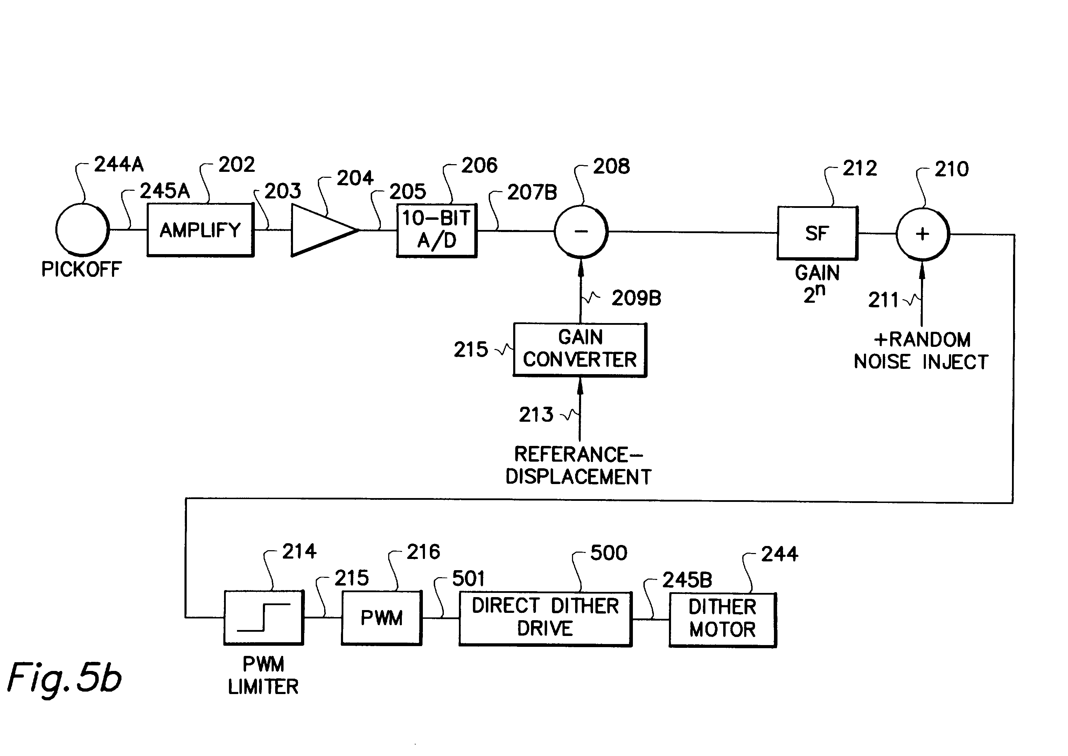

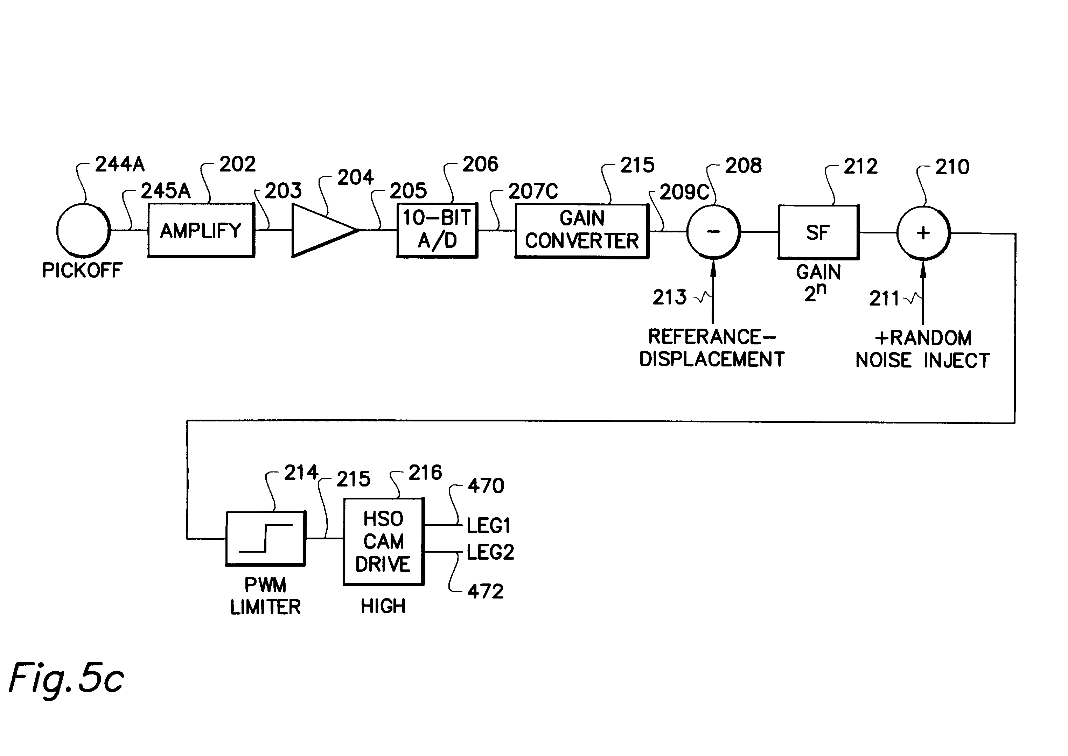

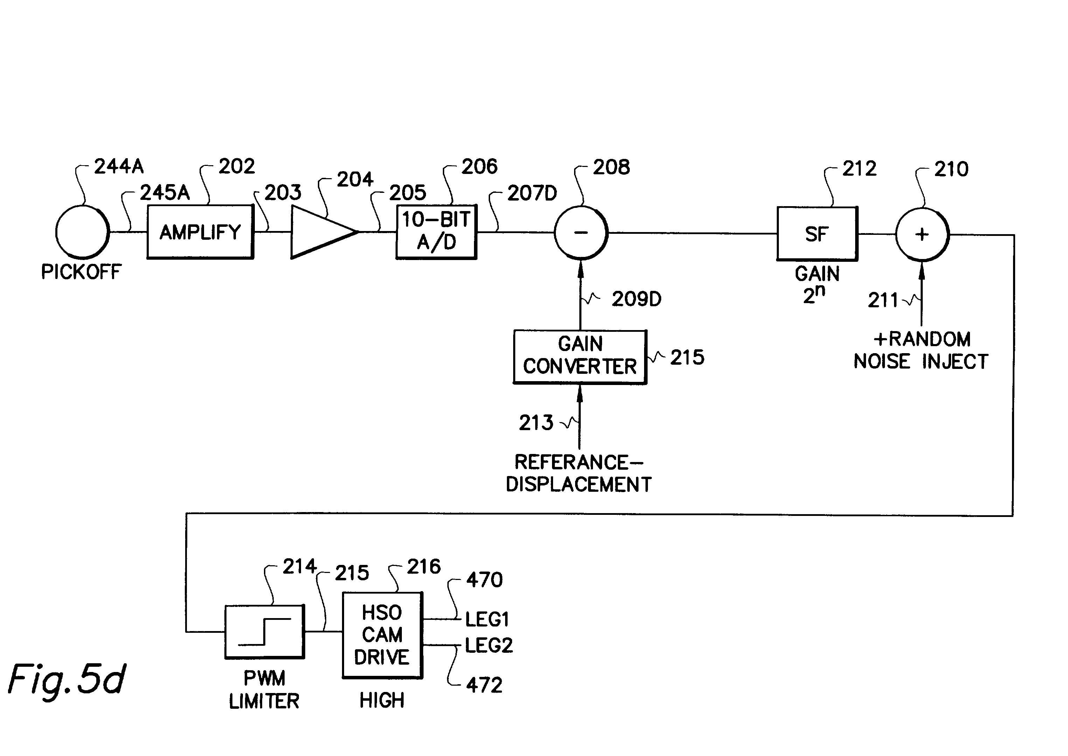

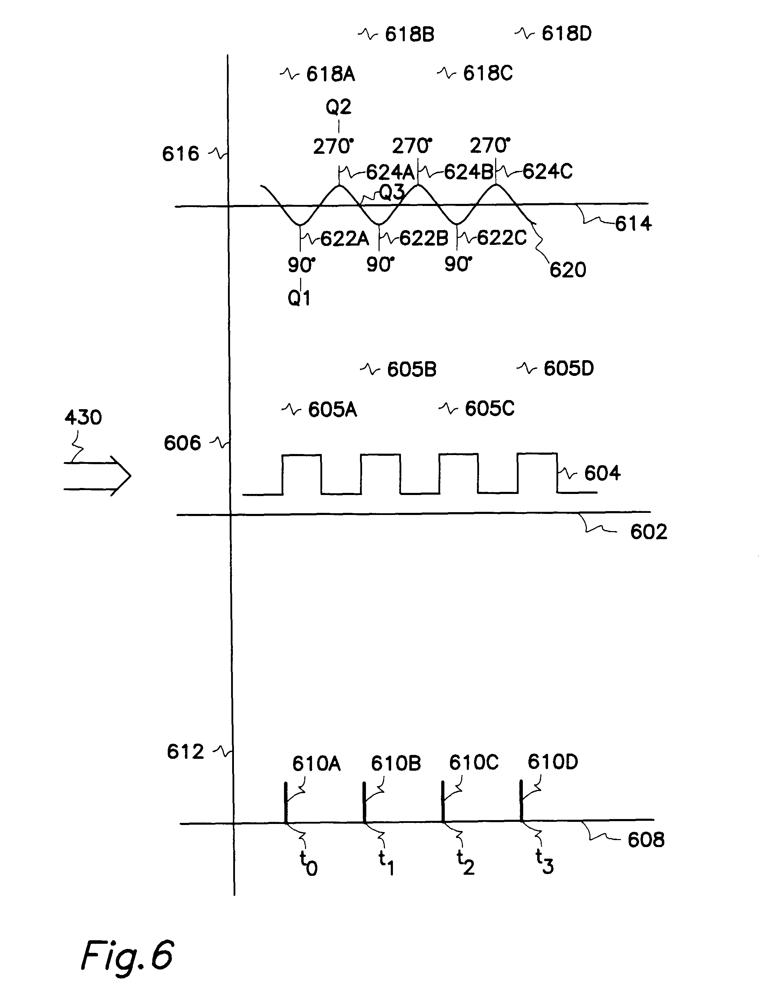

Briefly, in operation the RLG Block position represented by a pickoff voltage 245A is first amplified by dither pickoff amplifier 400. The amplified dither pickoff signal 501A is sent to the A/D converter 110 and also to a comparator (not shown) which in turn generates a square wave 501C which is sent to a one shot 810 to limit the maximum frequency of the interrupt. The one shot 810 is periodically reset at approximately the rate of 1000Hz. The output of the one shot interrupts the controller at positive edge zero crossings. The method of dither pickoff and drive is shown in more detail in Figure 5. Based on the zero crossing of the laser block position the microprocessor calculates the dither period and predicts sample times. The dither drive wave form shown in more detail in Figure 6 is then sampled by the A/D converter 110 at the negative and positive peaks of the dither signal sine wave. This sampling process also provides a 90 degree phase shift which is required to drive the dither motor 244B. After sampling, the A/D value is compared to the desired gain adjusted displacement reference, the quantity is multiplied by a gain factor, random noise is added and the signal is sent to the pulse width modulator 115. The random noise could advantageously be gaussian. The displacement reference is corrected by a gain adjustment of the dither stripper to correct for any pickoff scale factor variations. The reference displacement may be further adjusted at periodic intervals by the laser gyro direct dither drive system. The operation of the invention is discussed in more detail below.

In one embodiment of the invention a microcontroller 100 is comprised of the Intel 80C196KC Microcontroller. The microcontroller 100 contains three pulse width modulators which in this embodiment of the invention are used for various control functions. The pulse width modulator PWM1 115 is used for controlling the dither drive circuit. A number of software modules are involved in the initialization and control of the microcontroller 100. The software programs are run by the microprocessor 120 contained within the microcontroller 100. A PWM signal of 100% corresponds to a output of -150 volts, a PWM signal of 50% corresponds to an output of 0 volts, and a PWM signal of 0% corresponds to an output of +150 volts.

In one embodiment of the invention the pulse width modulation signal is initially set to a 50 % duty cycle. Part of the dither drive circuit utilizes a random noise quantity that is injected into the drive circuit. The dither drive random number generator is initialized at the time the control system for the modular gyro 10 is started.

The dither drive circuit is further initialized by the initialization of system variables. System variables refer to the reference voltages which are used to calculate the actual displacement of the lasing system. In the dither drive circuit a pickoff signal 245A which is an approximation of a sinusoid signal is generated by the dither pickoff. The pickoff signal represents angular displacement. The reference peak angular value is compared against the peak of the sinusoidal pickoff signal and a difference value is obtained which defines the error in the dither drive. The actual reference voltages are then initialized during system powerup. These reference values are stored in EEPROM 102 and represent a conversion from voltage to displacement.

In one embodiment of the invention the dither drive requires 200 milliseconds to initialize. The dither drive is started either simultaneously with the laser or slightly ahead of the laser.

In the embodiment of Figure 1 there are first and second timers in the microcontroller 100. The first timer is used for sampling functions. The second timer is used for dither drive and dither stripping functions. Both timers have to be synchronized. On board high speed output logic in the microcontroller 100 synchronizes the timers to perform such functions as A/D conversion for the dither stripping operation. The on board high speed input logic captures external events that are occurring in real time and stores the first timer count values in a FIFO register. The microcontroller 100 is thereby able to independently and asynchronously capture external events.

The sample strobe $DS_1$ is provided by the host inertial navigation system. $DS_1$ represents the time at which all the gyro's in the inertial navigation system should be sampled. The sample times need to be anticipated to eliminate modular gyro system latencies. The sample strobe $DS_1$ also synchronizes multiple gyro's within the INS.

In this embodiment of the invention the microcontroller 100 has a number of analog inputs that are multiplexed into a single analog to digital converter. The multiple use of a single A to D converter to address more than one analog input signal requires that the sampling be timed properly. The microprocessor system includes a non-volatile memory which in this embodiment is an electrically erasable programmable read only memory ("$E^2$ PROM"). Certain system parameters such as dither frequency and dither reference angle are stored in the $E^2$ PROM so that system parameters may be restored after system power on. Those skilled in the art will recognize that other non-volatile memory means can be used.

In the start up initialization sequence the dither drive is pulsed for 20 pulses at the dither frequency with a square wave. For example, in the case where the dither frequency is running at 500 Hz the duty cycle is changed from 0 % to 100 % for 20 pulses. This cycling supplies energy to the dither motor near its natural resonant frequency to get the dither motor started.

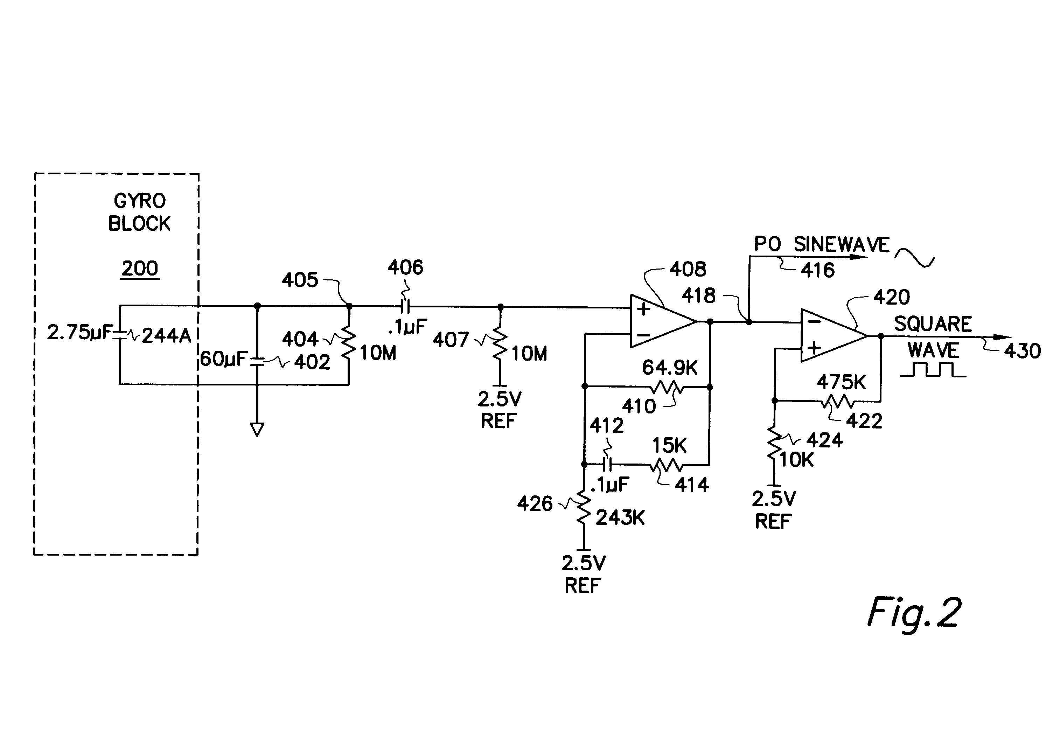

Referring now to Figure 2 which shows a circuit diagram of one example of a dither pickoff circuit made in accordance with the present invention. In one example, the dither pickoff apparatus comprises at least first, second and third capacitors 402, 406, 412, first through seventh resistors 404, 407, 410, 414, 422, 424, 426 and first and second amplifying means 408, 420. Also shown is dither pickoff 244A which is here symbolized by its inherent capacitance. The first capacitor 402 is connected in parallel with the first resistor 404 at node 405. The dither pickoff is also connected at node 405. The second capacitor 406 is coupled at a first terminal to node 405 and at its other terminal to a non-inverting input of the first amplifier 408. The first amplifier 408, resistors 410, 414 and 426 and capacitor 412 are connected in an arrangement suitable to provide a first gain factor and phase compensation to the dither pickoff circuit. The output 418 of the first amplifier provides a substantially sinusoidal signal 416 which is representative of the dither pickoff to an analog-to-digital input of the microcontroller 100. The second amplifier 420, and resistors 422 and 424 are connected and arranged in a well known manner to provide a substantially square wave signal 430 to the zero crossing input to a one shot 810 in the digital logic 800 and finally to the controller 100. The signal 430 is also representative of the dither pickoff and provides the basic zero crossing detection signal from which the dither period is calculated. The one shot 810 limits the maximum interrupt frequency to 1000 Hz and thereby eliminates false interrupts during start up.

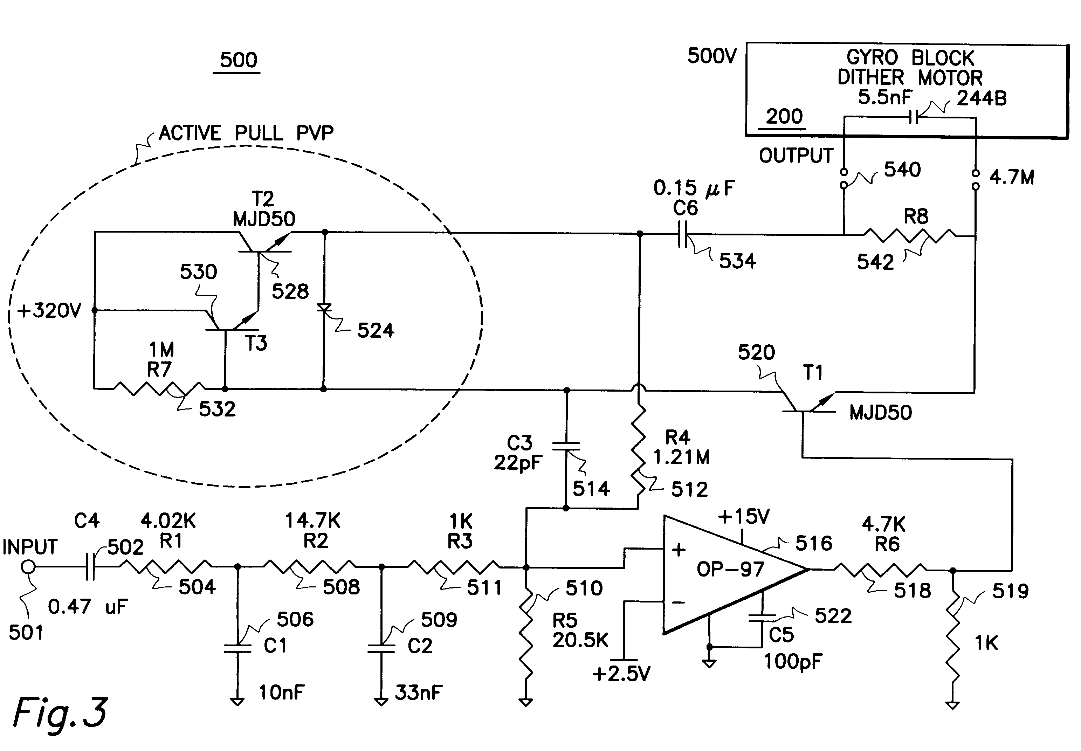

Now referring to Figure 3 which shows a circuit diagram of one embodiment of a direct digital dither drive circuit 500 as provided by one aspect of the invention. The direct digital dither drive 500 includes first through sixth capacitors 502, 506, 509, 514, 522 and 534, first through ninth resistors 504, 508, 510, 511, 512, 518, 519, 532 and 542, first through third transistors 520, 528 and 530, diode 524 and amplifier 516.

The first capacitor 502 is connected at a first terminal to a pulse width modulated output 501 from the controller 100. The first capacitor 502 is connected at a second terminal to a first terminal of the first resistor 504. A second terminal of resistor 504 is connected to a first terminal of the second capacitor 506 and the second resistor 508. A second terminal of the resistor 508 is connected to a first terminal of the third resistor 511, the third capacitor 509. A second terminal of the third resistor 511 is connected to a first terminal of the fourth capacitor 514 and the fourth resistor 512 as well as the non-inverting input of amplifier 516 and resistor 510. The output of amplifier 516 is connected to the base of the first transistor 520 through a resistor divider sixth resistor 518 and seventh resistor 519. The fifth capacitor 522 serves as compensation capacitance, increasing phase margins, for amplifier 516. A second terminal of capacitor 514 is connected to the collector of transistor 520 and the base of the third transistor 530 as well as a first terminal of the eighth resistor 532. The collector of the third transistor 530 is connected to a second terminal of the eighth resistor 532 and to a voltage source which may advantageously be about 300 volts in this embodiment of the invention.

The emitter of the third transistor 530 is connected to the base of the second transistor 528 which is also connected at its collector to the voltage source wherein transistors 530 and 528 form a Darlington pair. Diode 524 is a low voltage diode connected in parallel with the Darlington pair and provides a dead band. A second terminal of the fourth resistor 512 is connected to a first terminal of the sixth capacitor 534 and the emitter of the third transistor 528. The capacitor 534 is used to level shift the output of the transistor 528 by 150 volts. The drive signal is AC coupled across 534 to the ninth resistor 542 and to the dither motor 244B in the laser gyro block 200. The resistor 542 provides a DC average of zero volts to the dither motor.

In one embodiment of the invention the first through third transistors may advantageously be NPN transistors of model type MJD50 as available from the Motorola Company of the United States of America. The amplifier may advantageously be a bipolar operational amplifier such as model OP - 97 available from Analog Devices of Massachusetts, USA. Some example component values are illustrated in Figure 3. The controller 100 may advantageously be an Intel Corporation model 80C19KC microcontroller or equivalent device.

In operation the direct digital dither drive of the invention in this illustrated embodiment is a circuit that directly converts a 5 volt pulse width modulated digital signal from the controller 100 to an analog 300 volt peak-to-peak signal without the use of a transformer. In the past, transformers have proven to be unreliable and require a large core size to avoid saturation when driving the dither motor capacitive load at low frequencies such as about 500 Hz. The pulse width modulated output 501B from the controller 100 may advantageously be a 5 volt pulse width modulated (PWM) signal from the controller with a fixed frequency of about 23.5 KHz which is derived from a 12 Mhz crystal 104 and has a resolution of 512 steps from 0% to 100% PWM. The PWM signal is used only as a means for digital-to-analog conversions and should not be confused with schemes to pulse width modulate at the dither frequency.

In the embodiment of the invention shown in Figure 3, the direct digital dither drive circuit requires less than 300 mW compared to 750 mW required by transformer designs when driving a 5.5 nF load which is a typical dither motor load with a 500 arcsec peak to peak amplitude and 4 arcsecs RMS random noise. In a typical laser gyro system 4 arcsecs is equivalent to about 1 sigma standard deviation. The efficiency of the circuit apparatus of the present invention is achieved by placing three low pass poles of the transfer function at approximately $(550 \text{ Hz} \times 23.5 \text{ KHz})^{1/2} = 3.6$ KHz which filters the PWM 23.5 KHz signal and yet yields rise and fall times of less than 200 microseconds. Since the power required to drive the capacitive load is proportional to $(V^2 \times f)$ where f is the drive frequency, it is important to filter the PWM signal from the load to conserve power.

The efficiency of the drive is further enhanced by the controller which allows the PWM value to change only twice per dither cycle. There is a first change at the positive peak and a second change at the negative peak of the dither pickoff. The theoretical power required to drive 5.5 nf at 550 Hz at 300 volts (full amplitude) is given by the formula:

$$P = 2f(1/2 \ CV^2) = 272 \text{ mW}.$$

The AC power for one embodiment of the present invention approaches this theoretical limit. The DC bias power is about 81 mW.

Other aspects of the invention include a single power supply design with all NPN transistors and no PNP transistors. The NPN transistors are available in a surface mounted DPAK with the following parameters:

$$V_{CEO} = 400 \text{ VDC and } V_{CB} = 500 \text{ VDC}.$$

Diode 524 provides a dead band so as to prevent transistors 520 and 528 from being turned on simultaneously. The dead band eliminates current spikes on the power supply and further improves efficiency.

The fourth capacitor 514 is connected to the base of transistor 530 rather than the emitter of transistor 528 at the output to enhance stability during the rise and fall transitions. The fifth resistor 512 sets the DC operating point of the output at the emitter of transistor 528 at about +150 volts in one example embodiment of the invention. The output at the emitter of transistor 528 is then level shifted to the final output 540 by coupling capacitor 534. In this arrangement, a 50 % duty cycle PWM signal input corresponds to 0 volts output at output 540. A 0 % duty cycle PWM signal corresponds to an output at 540 of about +130 volts. A 100 % duty cycle PWM signal corresponds to about -130 volts at the output. In the example illustrated, the time to charge the coupling capacitor 534 is about .7 seconds during power up of the laser gyro.

In a further aspect of the invention the input is AC coupled by the first capacitor 502 to provide a symmetrical drive with no low frequency components. During start-up of the laser gyro the controller outputs a 50 % duty cycle PWM signal for about 14 ms to charge capacitor 502 to a predetermined DC level. As stated earlier the start up initialization sequence begins by pulsing the dither drive for 20 pulses at the dither frequency with a square wave. For a dither frequency of 500 Hz the duty cycle is changed from 0 % to 100 % for 20 pulses. This cycling supplies energy to the dither motor near its natural resonant frequency to get the dither motor started.

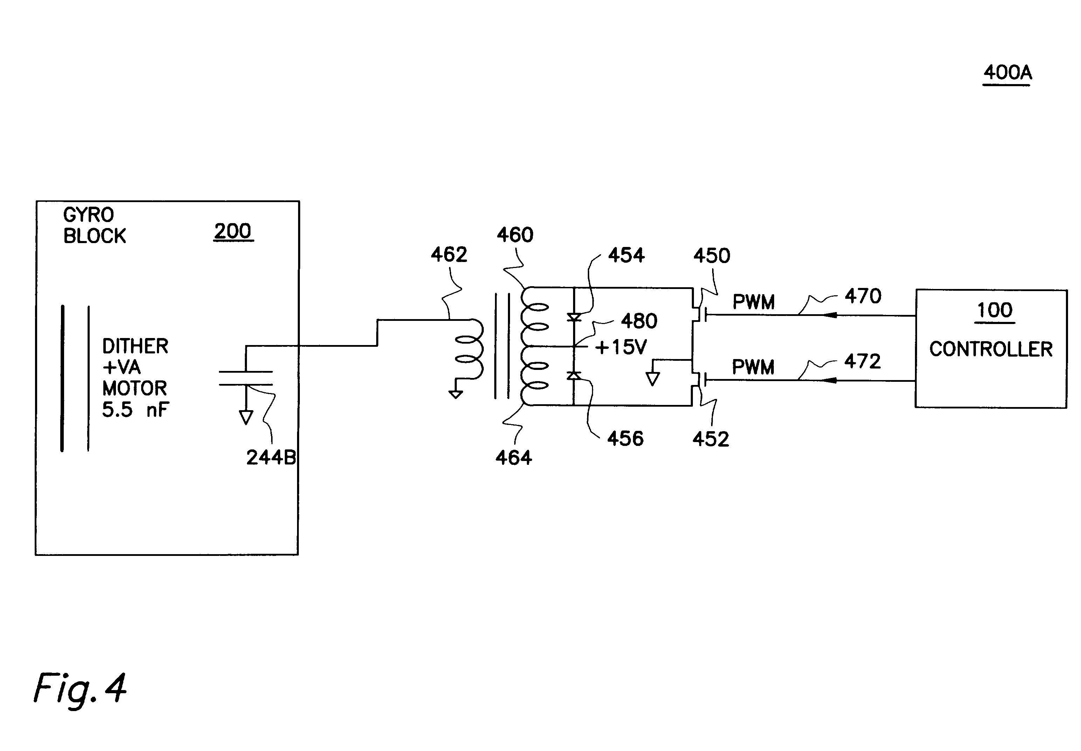

Referring now to Figure 4 which shows a detailed circuit diagram of an alternate embodiment of a dither drive circuit as provided by one aspect of the invention. The dither drive circuit of Figure 4 comprises a transformer having primary windings 460, 464 and secondary windings 462. A first diode 454 is connected across winding 460 to a voltage source 480 which may nominally be +15 volts. Similarly, a second diode 456 is connected across winding 464 to voltage source 480. Secondary winding 462 is coupled at a first leg to dither drive 244B in the laser gyro block 200. A pair of transistors 450, 452 are driven by first and second PWM signals 470, 472 in a push-pull fashion. The transistors 450, 452 may advantageously be MOSFET type devices or equivalent devices.

Now referring to Figure 5A which shows a high level schematic of the direct digital dither drive method and apparatus of the invention showing the flow of the dither pickoff signal 245A from the dither pickoff 244A through to the dither motor 244B. Figure 5A represents an embodiment of the dither drive that gain converts the voltage 205 representing the dither displacement to laser gyro counts which represent the inertial rotation of the gyro 200. All subsequent processing is carried out using counts up to the generation of the PWM signal 501.

The dither pickoff 244A delivers a dither pickoff signal 245A to a filter 202 which conditions the dither pickoff signal 245A and provides a conditioned pickoff signal 203. The pickoff signal 203 is amplified by amplifier 204 and sent to a 10-Bit A/D converter 206. A/D converter 206 processes the conditioned and amplified dither pickoff signal 205 into a digital signal 207A representative of the dither pickoff signal 245A voltage. The digital signal 207A is then gain converted by multiplier 215 to a count value 209A representing angular displacement of the gyro block 200.

In the embodiment of Figure 5A the digital signal 207A is converted into counts by being multiplied by a predetermined constant K. One count is approximately equal to one arcsec of angular displacement. The constant K is in counts/volt units. K is the same constant used in the dither stripper to obtain an equivalent digital volts. The constant K is continuously updated by the dither stripper and gives a direct calibrated correlation between dither pickoff analog volts and equivalent digital readout counts.

A predetermined reference displacement dither angle 213 expressed in digital counts is stored in the EEPROM 102.

The digital signal then flows to a digital gain amplifier 212 which feeds a random noise injector 210 which injects random noise 211 in the signal. Random noise 211 is provided to prevent the lasers from experiencing dynamic lock in effects. The signal then enters a pulse width modulation limiter 214 which, in turn, provides a signal 215 to the pulse width modulator, 216. The PWM signal will depend on the difference between the reference value and measured displacement value of the block.

The direct dither drive is shown in more detail in Figure 3.

Referring now to Figure 5B which shows an alternative high level schematic of the direct digital dither drive method and apparatus of the invention showing the flow of the dither pickoff signal 245A from the dither pickoff 244A through to the dither motor 244B. Figure 5B represents an embodiment of the dither drive where all processing is carried out using volts up to the generation of the PWM signal 501.

In the alternate embodiment of the invention shown in Figure 5B the output of the A/D converter 206 is fed to the comparator 208 to generate a signal that represents a voltage instead of counts as in Figure 5A.

A predetermined reference displacement dither angle 213 expressed in digital counts is stored in EEPROM 102. In the embodiment of Figure 5B the reference displacement 213 is converted into digital volts by being multiplied by the reciprocal of the predetermined constant K. The remainder of the processing in Figure 5B proceeds as in Figure 5A.

Referring now to Figure 5C which shows an alternative high level schematic of the direct digital dither drive method and apparatus of the invention showing the flow of the dither pickoff signal 245A from the dither pickoff 244A through to Legl 470 and Leg2 472 of the dither motor 244B. As in the method and apparatus of the invention according to Figure 5A, Figure 5C represents an embodiment of the dither drive that gain converts the voltage 205 representing the dither displacement to laser gyro counts which represent the inertial rotation of the gyro 200. All subsequent processing is carried out using counts up to the generation of the high speed output content addressable memory (HSO CAM) drive signals 470 and 472.

In Figure 5C the digital signal also flows to a digital gain amplifier 212 which feeds a pulse width modulation limiter 214 which, in turn, now provides a pulse width modulation signal 215 to the HSO CAM Drive 216 of the digital dither drive. As with the foregoing embodiments the PWM signal will depend on the difference between the reference value and measured displacement value of the block.

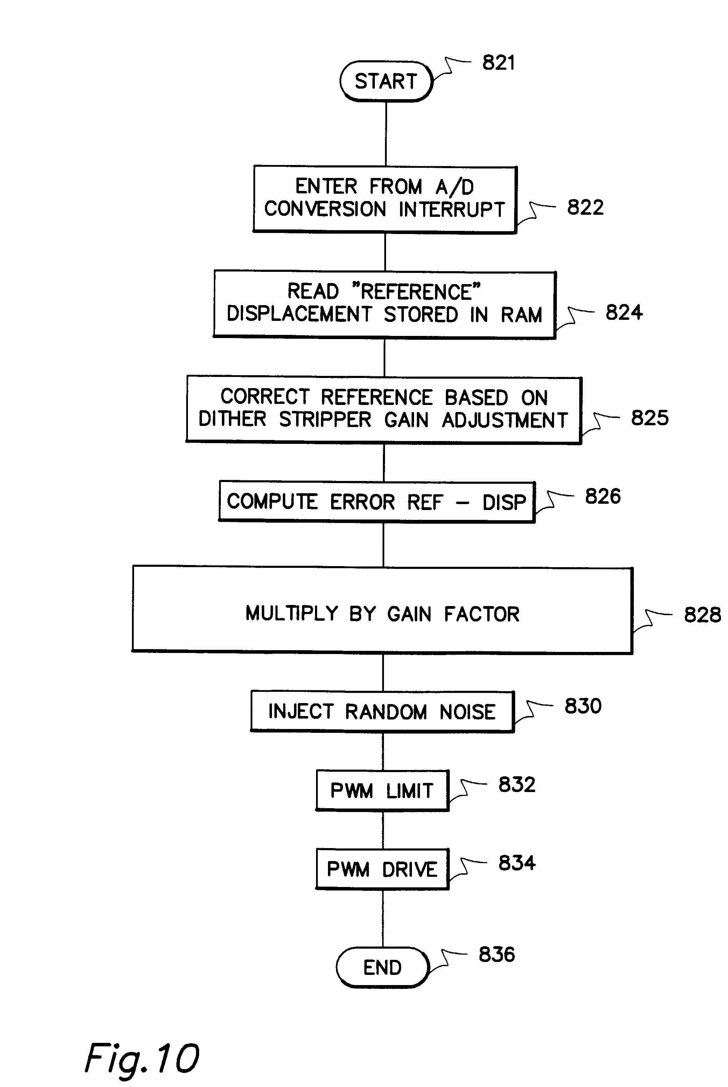

The high speed output logic in this embodiment of the invention is provided by the HSO unit on the 80C196KC microprocessor from INTEL CORPORATION. The high speed output logic triggers events at predetermined times. The events are orchestrated by writing commands to what is referred to as HSO command register and HSO time register. Different events are possible with the high speed output including A/D conversions, resetting timers, resetting software flags, and switching high speed output lines. More information is available on the high speed output logic referring to the 80C196 KC User's Guide from INTEL CORPORATION on pages 5-49. Specifically reference figure 10-1 in the 80C196 KC User's Guide which describes the HSO command register. The input to the direct dither drive 500 is generated from the HSO CAM drive or the PWM output of the 80C196KC microcontroller. The structure of the direct dither drive 500 is shown in more detail with reference to Figure 3.

The high speed output CAM drive 216 then provides the dither signals to drive Leg 1 at 470 and drive Leg 2 at 472.

Figure 5D represents an embodiment of the dither drive where all processing is carried out using volts up to the generation of the HSO CAM drive signals 470 and 472.

Now referring to Figure 6 which shows a detailed interrupt timing diagram of the method of the invention. The direct drive dither system in one embodiment of the invention uses the output 430 of the zero crossing detector of Figure 2 to trigger an interrupt. Signal 430 of Figure 2 provides a wave train that resembles a timing clock. The detail of the wave train is shown in Figure 6 as a group of square waves 604. The wave train is shown as the output of signal line 430 as a function of time 602. The signal 604 indicates when the gyro block 200 has crossed the zero point in its cyclic dither motion as indicated by gyro block position signal 620. The zero crossing points are indicated by 618A, 618B, 618C and 618D. The generated interrupts are shown as interrupts 610A, 610B, 610C and 610D. The interrupts are generated on the zero crossing 618A, 618B, 618C and 618D of the block 200 corresponding to a low to high transition of the output signal 430 at points 605A, 605B, 605C and 605D.

The frequency of the dither pickoff 244A can be calculated by noting when in time the low to high transitions occur. In Figure 6 to denotes the occurrence of transition 605A generating interrupt 610A, $t_1$ denotes the occurrence of transition 605B generating interrupt 610B, $t_2$ denotes the occurrence of transition 605C generating interrupt 610C, and $t_3$ denotes the occurrence of transition 605D generating interrupt 610D. The frequency of dither can be calculated with this set of information from interrupt to interrupt by dividing the time difference ( $t_1$ - $t_0$ ) into 1 cycle or $1/(t_1 - t_0)$. The frequency of dither can be calculated with this set of information between more than one interrupt by dividing the time difference between interrupts, 610A and 610D, ( $t_3 - t_0$ ) into 3 cycles or $3/(t_3-t_0)$.

In one embodiment of the method of direct dither of the invention the location of the 90° and 270° block cycle positions is required to be measured. The 90° positions are shown in Figure 6 as points 622A, 622B and 622C. The 270° positions are shown in Figure 6 as points 624A, 624B and 624C.

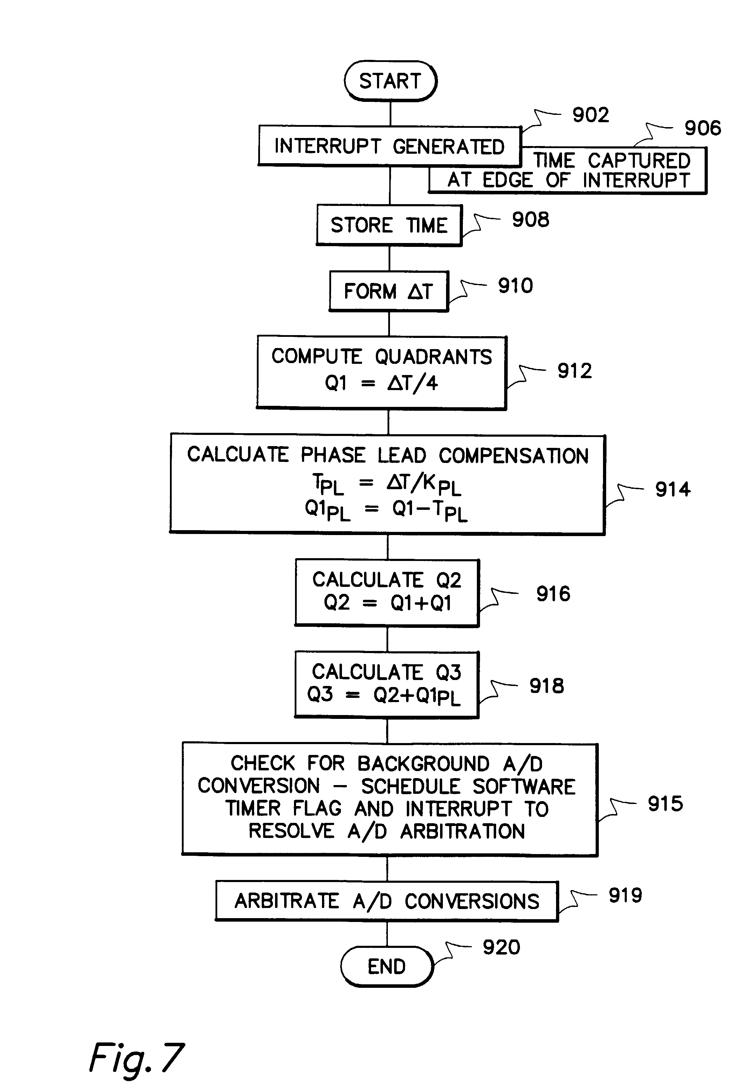

Now referring to Figure 7 which shows the method of the direct digital dither drive apparatus of the invention to determine the 270° and 90° crossing points of the dither cycle. The method first starts with process block 902 which shows the interrupt as generated by the zero crossing detector output 430. The zero crossing detector is shown in prior figures in Figure 2 and Figure 6 as signal 604. The interrupt signal from the zero crossing detector is known in one embodiment of the method of the invention as the T2CAP interrupt. The process then flows to 904 where the T2CAP interrupt service routine is executed. The T2CAP interrupt service routine is described in the following process flow diagrams. The time at which the T2CAP interrupt occurred is captured in 906. The process then flows to 908 where the time of the interrupt, Tn, is stored in a temporary register. The process then flows to 910 where the change in time is computed from the last interrupt. The first time this process is executed the initial time is approximated. The new time, Delta T, is determined to be the difference between the current time minus the last interrupt time. The process then flows to 912 where the elapsed time or the difference in time between the two interrupts is divided by four. This procedure is done to determine the quadrature for the difference in time between interrupts. This number is as accurate as the resolution of the digital system and represents the amount of time between zero crossings of the dither cycle. This in turn represents the frequency of the actual dither of the laser gyro block.

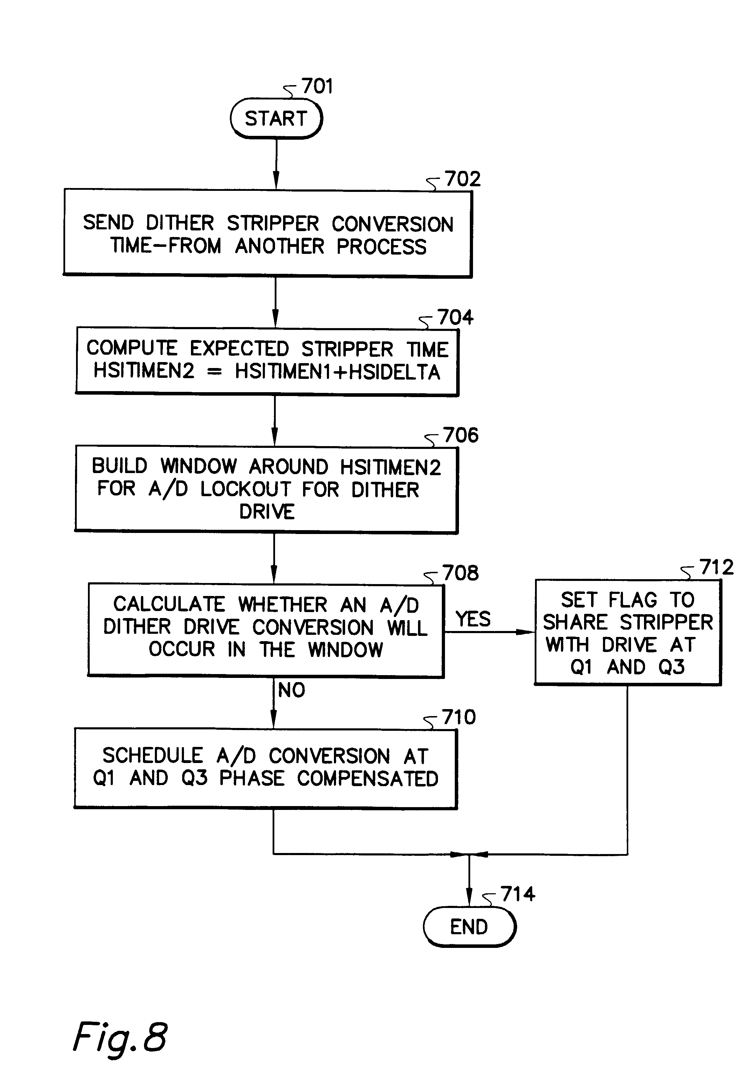

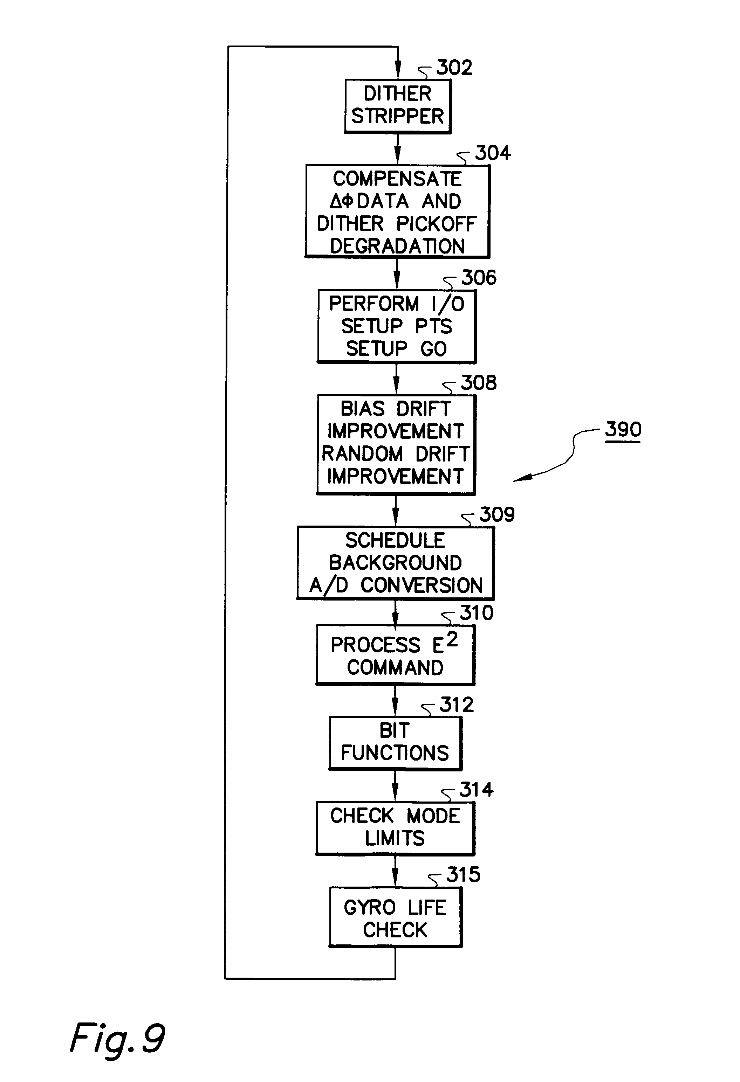

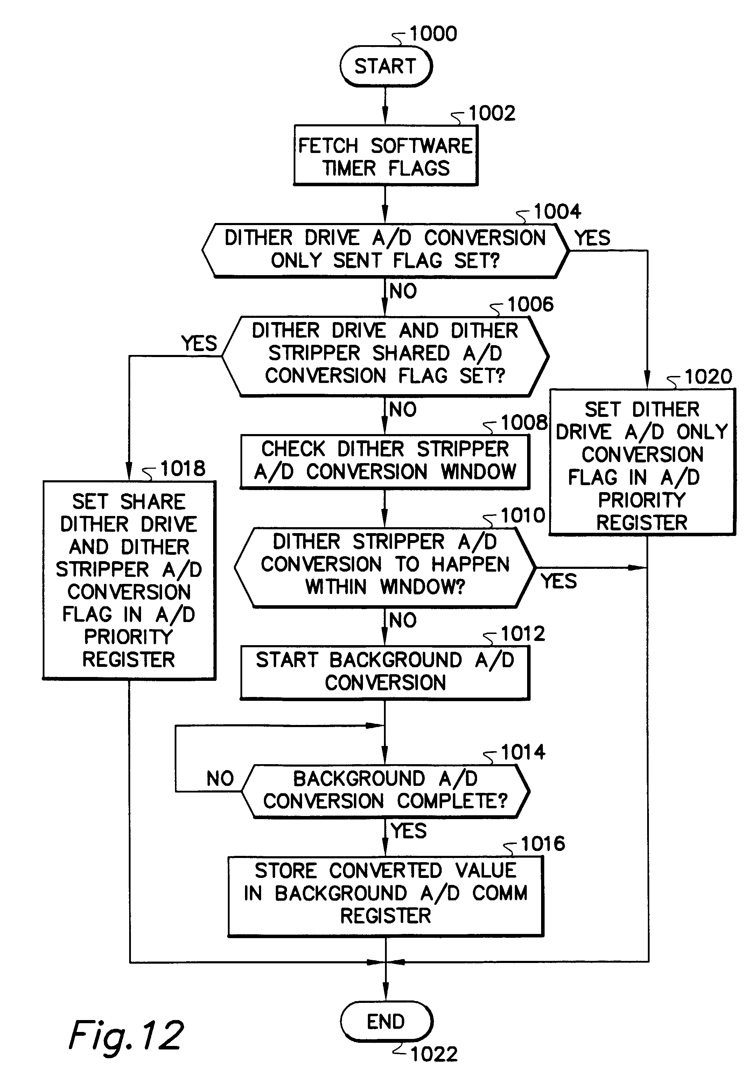

The process then flows to process 914 where the phase lead compensation is calculated. The phase lead compensation is determined in the T2CAP interrupt shown in Figure 7. The phase lead is defined as Delta T divided by a constant $K_{PL}$. Delta T corresponds to the amount of time required for the laser block to dither one cycle or Delta T equals 360°. The constant $K_{PL}$ is a predetermined value based on the dither cycle and the analog delay. For example if the predetermined constant $K_{PL}$ is equal to 32 the phase lead would be 360°/32 or 11.25°. The amount of phase lead time defined as $T_{PL}$ would be calculated by multiplying Delta T by the phase lead proportion of the cycle or $T_{PL}$ = Delta T * (11.25°/ 360°). The objective of the phase lead is to provide a dither drive signal that coincides with the desired actual dither drive signal. This phase lead anticipates the associated delay in the processing circuitry of the dither drive and the associated delay in software processing. The first quadrature QI corresponds to the actual displacement of the laser block at the 90° position. The phase lead quadrature, $Q1_{PL}$, is defined as Q1 - $T_{PL}$ which represents the actual sample time for the high speed output dither drive CAM 216 shown in Figure 5. The process of Figure 7 then flows to 916 where the halfway point Q2 is determined to be twice the sum of the first quadrature (Q1 + Q1). The process then flows to 918 where the third quadrature Q3 is determined to be Q2 + $Q1_{PL}$. The T2CAP interrupt of Figure 7 then checks for the existence of a background A/D conversion if necessary. A need for a background A/D conversion schedules a software timer flag and interrupt which will be used by the arbitration method of the invention shown in Figure 12 to resolve the use of the current A/ D conversion. The software timer flag and interrupt are scheduled using the high speed output logic. The process then flows to step 919 where the A/D Conversion for the dither drive and dither stripper are arbitrated with background A/D conversions. Process 919 is described in detail with reference to Figure 8. The process ends at 920 and returns to the running modular gyro monitor control loop shown in Figure 9.

Monitor control loop 390 shown in Figure 9 is the main process execution loop for the digital modular gyro 10. The monitor control loop waits for the dither stripper A/D conversion to complete at step 300 before executing the process of the monitor control loop. A conversion complete flag is included in the apparatus of the invention which if set indicates that the A/D conversion completed. The monitor control loop 390 shows first the execution of the dither stripper algorithm 302. The compensation of the rotational inertial navigation data for temperature bias drift and age occurs next in step 304. The monitor control loop 390 performs I/O set up for the system in 306. The process then flows to the bias drift improvement and random drift improvement step in 308. The process then flows to 310 where any commands, given by an outside system, for the modular gyro are processed. The process executes a built-in test function at 312 and checks laser mode limits in process 314. The monitor control loop 390 then repeats this set of processes until the modular gyro 10 is shut down.

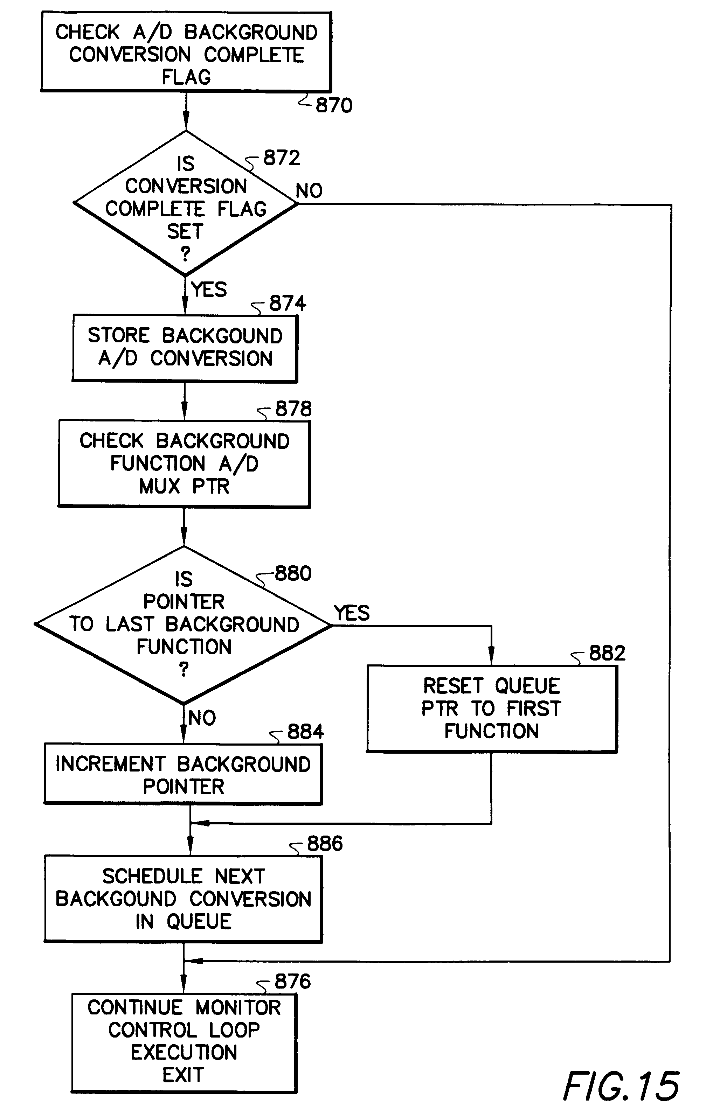

Now referring to Figure 15 which shows the method of scheduling a A/D background conversion. The scheduling of the A/D background conversion occurs in a hardware system that has a predetermined set of A/D conversion events that can be scheduled in a queue. The number of A/D conversions are predetermined. In one example embodiment of the invention there are seven A/D conversions in the queue. The process of arbitrating them with the monitor control loop shown in Figure 9 first starts in step 870 where the A/D background conversion complete flag is checked. The process then flows to 872 where the conversion complete flag is checked to see if it is set. If it is not set the process flows to exit the routine to return to the monitor control loop in step 870. In this case the A/D conversion cannot be accomplished because the A/D conversion for the last scheduled A/D conversion is not done yet. If the conversion complete flag is set the process flows to step 874 where the current background A/D conversion is stored in a background conversion A/D register. This relates the current background A/D conversion to a function that is set up by another routine such as measurement of temperature, PLC monitoring, etc. The process then flows to step 878 where the background A/D conversion multiplexer pointer is checked. The process then flows to 880 which determines what to do after the pointer is checked. If it points to the last background function then the queue is reset in step 882 to point to the first function. It the pointer is not the last background function then the process increments to the next background function pointer in 884. The process in either case flows to step 886 to schedule another background conversion in the queue. The process then exits to the monitor control loop in 876.

Now referring to Figure 8 which shows the method of arbitrating a single analog to digital converter between multiple analog signal inputs in the digital dither drive application of the method of the invention. Figure 8 shows a process flow diagram in which the digital modular gyro 10 transfers a dither stripper conversion time 702 to step 702. The conversion time HsiTimel is calculated from the dither stripper process which is described in applicant's copending PCT application based on U.S. Serial No. 07/805,122 filed 11 December 1991 entitled Laser GYRO DITHER STRIPPER.

The process then flows to compute the expected stripper time which is calculated from two values which are sent in process 702. The first value is the HsiTimel which is the beginning of the dither stripper conversion time and the HsiDelta which is also sent from the external system through process 702. The expected dither stripper sample time is the sum of the HsiTime1 and HsiDelta. This time is called HsiTime2. The process then flows to 706 where a window is built around the HsiTime2 to lock out the A/D converter for the dither drive. This prevents dither drive A/D conversion from interfering with the dither stripper A/D conversion if they occur simultaneously. The A/D converter in this embodiment of the invention is an asynchronous converter.

The A/D conversion will occur asynchronously with the processes that set the A/D conversion up. Process step 708 calculates whether or not the A/D conversion for the dither drive will occur in the dither stripper window. The process then forks to either process step 712 or process step 710. Process step 710 sets up the high speed output content addressable memory (HSO CAM) to schedule a phase compensated A/D conversion and software timer flag and interrupt specifically for the dither drive. Process step 712 sets up the HSO CAM to schedule a software timer flag and interrupt specifically for the dither drive to share the already scheduled dither stripper A/D conversion. The method of the invention checks the software time flag's condition to determine what type of action to take at the scheduled time, whether a dither stripper conversion, dither drive conversion, a shared dither stripper and dither drive conversion or a background conversion. Process step 708 provides a method of either scheduling a new A/D conversion or sharing the one that is scheduled to happen. Implicit in the method of the invention is the assumption that a single A/D conversion within the window is adequate for dither drive applications because the dither stripper A/D conversion is always of highest priority. In process 712 a flag is set which will indicate to another routine, namely the dither drive routine and the dither stripper routine that the A/D conversion will be shared. In process step 710 the A/D conversion is scheduled and the result of the conversion is sent to the content addressable memory within the microcontroller 100 for the high speed output logic described below. The A/D conversion is scheduled at time Q1 and Q3 which have been phase compensated as described above. The process then flows to 714 where the arbitration of the A/D converter has been completed.

Now referring to Figure 10 which shows the method of computing the pulse width modulated drive signal from the analog to digital conversion of the dither pickoff. The method of the invention which is embodied in the 80C196 KC microcontroller 100 starts in process block 821 with an A/D conversion interrupt from the dither drive routine at 822. The reference displacement, which is the amount of angular displacement of the dither motor expressed in readout counts that should have occurred, is read from memory in step 824. The dither angle reference counts are converted to equivalent analog pickoff signals in digital volts based on the dither stripper gain adjustment at step 825.

The process then flows to 826 where the error in the dither motor displacement is calculated as the reference displacement minus the actual displacement. The process then flows to 828 where the computed error is multiplied by a predetermined gain factor which is 50 in one embodiment of the invention. The process then flows to 830 where random noise is injected into the system at 830. By way of example and not limitation in one embodiment of the invention the distribution of the random noise is Gaussian. The process then flows 832 where the pulse width modulated signal output will be limited to a maximum value of 100% PWM and a minimum of 0% PWM to avoid rollover of the register. In this embodiment of the invention the limiting value is 0 or 255 representing a PWM of 0% or 100%. The process then flows to step 834 where the dither drive is provided with the calculated drive level to bring the dither motor within the reference value adjusted by the injected random noise. The process then ends at 836.

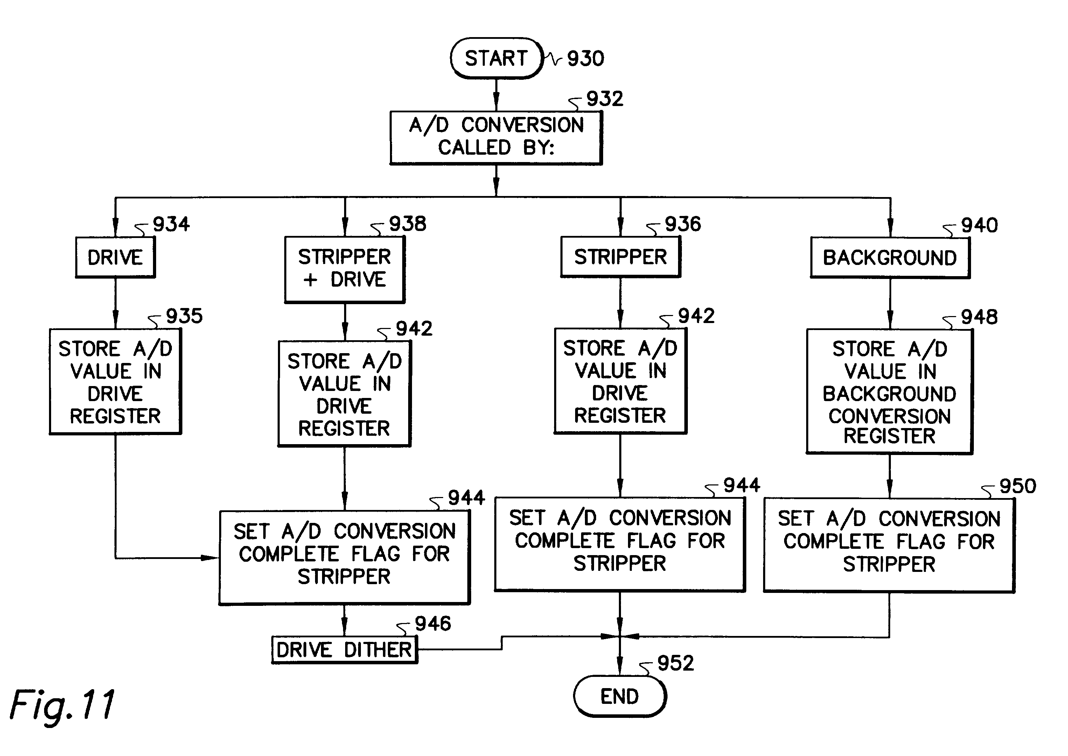

Now referring to Figure 11 which shows a schematic representation of the direct digital dither drive A/D conversion handler. A/D conversions are required in the modular gyro for dither drive, dither stripper and background conversions such as those required to compute the quadratures of the dither. The process shown in Figure 11 is the method by which the A/D conversions are handled depending on which process called the A/D conversion. The method starts at 930 with an A/D conversion interrupt. The source of the A/D conversion is determined to originate from, in process block 932, either the dither drive at 934, the dither stripper at 936, the dither stripper and dither drive 938 or background processes 940. The stripper and drive step 938, indicates that the dither drive A/D conversion happened within the dither stripper A/D conversion window. The process flows to step 942, just as a simple dither stripping operation, because the window for the dither stripper will be adequate for the dither drive also. The digital drive 934 calling the A/D conversion flows directly to the dither drive at 946. The dither drive routine is described in more detail in Figure 10.

By the time the A/D conversion "happens" it is already known which processes called for the A/D conversion. This was predetermined by the T2CAP interrupt shown in Figure 8 and software timer interrupts.

The process flows to step 942 if the dither stripper or the dither drive and dither stripper call for an A/D conversion wherein the A/D value in the stripper register is read. The A/D conversion complete flag is then set at 944 to indicate that the recent A/D conversion value for the stripper or stripper and drive is in the stripper register and was called by the stripper and drive. The process then flows in either case of the drive or stripper and drive to drive the dither at 946. In the instance of a background A/D conversion the process flows to 940 where the A/D value is fetched out of the background register at 948 and the conversion complete flag is set for a background conversion 950. In all cases the process ends at 952.

Now referring to Figure 12 which shows an interrupt service routine for the software timer interrupt to schedule either a dither only conversion, shared conversion or background conversion. The process starts 1000 by fetching a software timer flag in step 1002 from a special function register. The process then checks to see whether or not the software timer flag is set for a dither drive A/D conversion. If so the process proceeds to step 1020 to set the dither drive A/D conversion only flag in the A/D priority register in the microcontroller 100 scratch pad RAM and ends at step 1022. If a dither drive conversion is not indicated then the process flows to step 1006 where the process checks to see whether or not the software timer flag is set for a drive and stripper conversion. If so the process proceeds to step 1018 to set the share dither stripper with the dither drive A/D conversion flag in the A/D priority register in the microcontroller 100 scratch pad RAM and ends at step 1022. If a shared conversion is not indicated then the process flows to step 1008 where the method of the invention checks whether or not a dither stripper A/D conversion is in process. Implicit in the method of Figure 12 is the condition that if there is not a shared conversion or a dither drive conversion there must be a background conversion. The process then flows to step 1010 to check whether or not the dither stripper A/D conversion will happen within a window defined as HsiTime + HsiDelta as explained in step 702. If the conversion occurs in the window the process ends at step 1022. If the conversion does not occur in the window the process flows to step 1014 to wait for the background conversion to complete. The background conversion will occur within a specified period, in one embodiment of the invention the background conversion occurs within 20 microseconds. The process then flows to step 1016 to store the converted value to the background A/D register. The process then ends at step 1022. Those skilled in the art will recognize that either waiting for the background A/D conversion process to complete can be interrupt driven as described in Figure 11 or polled as described in Figure 12.

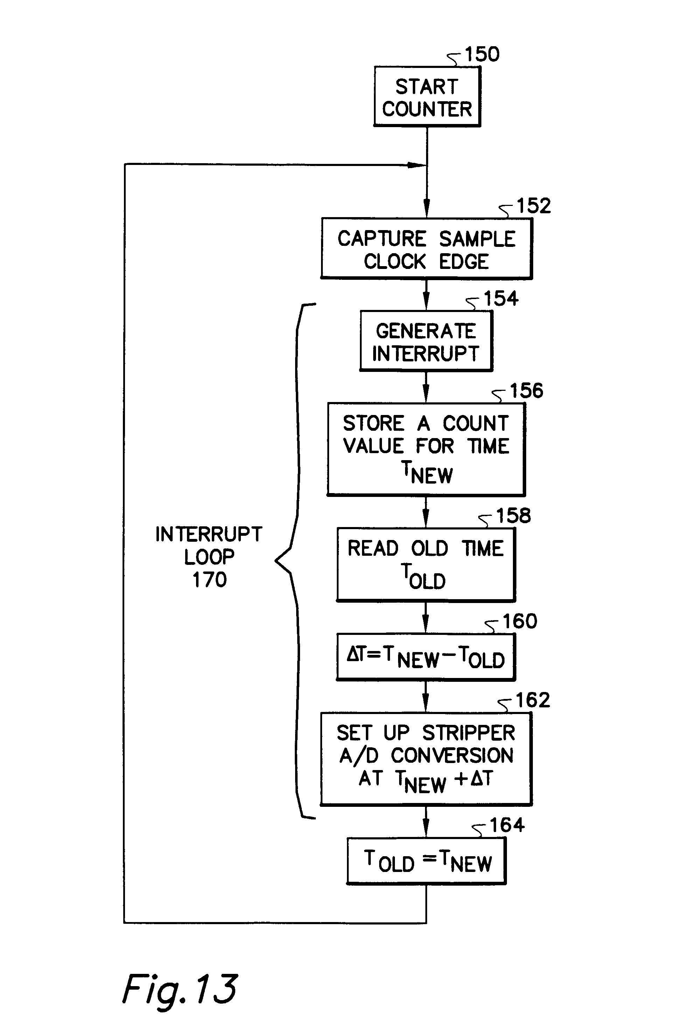

Now referring to Figure 13 which shows the method of the invention used to compute and anticipate the occurrence of the next system sample clock. The importance of anticipating the sample clock is illustrated by the need for the external inertial navigation system to obtain inertial navigation data which is synchronized to a external clock uniform throughout the inertial navigation system. Without this capability inertial navigation data would be provided asynchronously thus resulting in inaccurate evaluation of inertial position. The process of Figure 13 starts by starting a counter in process block 150 when the process is first initialized. The process then flows to process block 152 where a edge of a sample clock from the system is captured which generates an interrupt in process block 154. The interrupt then starts a process called the interrupt loop 170. The interrupt loop schedules an A/D conversion. A count value from the counter of step 150 is stored at the interrupt time when the interrupt is generated in process step 154. The process then flows to 158 where the last time an interrupt occurs is read from memory. The process then flows to 160 where the difference in time between the old interrupt and the new interrupt is computed as "delta t". The process then flows to 162 where the A/D conversion is set up in the high speed output of the microprocessor. The new time for the high speed output to occur is at the "new t" plus "delta t". The process then flows to 164, the "old t" is set up to be equal to the "new t" and the process returns to process 152 where the next sample clock is captured. The method of Figure 13 dynamically compensates for changes in system sample clock period and dynamically tracks the behavior of the system sample clock. The A/D conversion for the dither stripper is set up in 162 in the HSO logic. The A/D conversion 162 is also used by the dither drive which is described in applicant's copending application ring laser gyro direct dither drive.

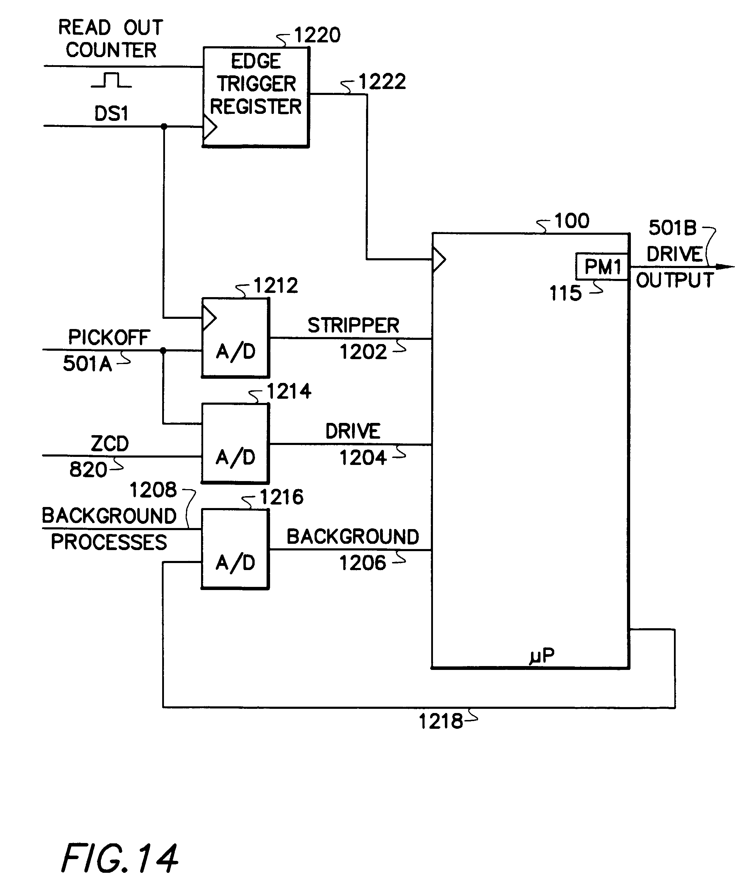

Now referring to Figure 14 which shows the method and apparatus of the invention to drive a laser gyro dither utilizing three analog to digital converts. Those skilled in the art will appreciate that the methods of the invention could be applied to the apparatus described in Figure 14.

In this embodiment the first A/D converter 1212 provides a digital representation of the dither pickoff voltage that is timed appropriately for the dither stripper operations described above. The A/D conversion for the dither stripper must occur when DS1 is active. The microcontroller 100 uses the results of the A/D conversion and the output 1222 of the edge triggered read out counter register 1220 to perform dither striping operations.

The second A/D converter 1214 provides a digital representation of the dither pickoff voltage that is timed appropriately for the dither drive operations described above. The A/D conversion for the dither drive must occur when the zero crossing detector 820 is active. The microcontroller 100 uses the results of the A/D conversion 1204 to perform dither drive operations.

The third A/D converter 1216 provides a digital representation of background processes such as temperature measurement, RIM and LIM measurement, PLC monitoring, etc. Background A/D conversions are enabled by the microcontroller through enable line 1218.

This invention has been described herein in considerable detail in order to comply with the Patent Statutes and to provide those skilled in the art with the information needed to apply the novel principles and to construct and use such specialized components as are required. However, it is to be understood that the invention can be carried out by specifically different equipment and devices, and that various modifications, both as to the equipment details and operating procedures, can be accomplished without departing from the scope of the invention as claimed.

**Claims**

1. A dither drive apparatus for a laser gyro (10) having a dithered gyro block (200) with a dither motor (244B) and dither pickoff (244A), with said apparatus comprising:

    a. a means (402, 404, 406 and 407) for sensing the dither pickoff connected to the dither pickoff (244A) and having a dither pickoff output (245A);
    b. a means (400, 202) for amplifying the dither pickoff output (245A) having an amplified dither pickoff output (501 A);
    c. a control means (100) connected to the dither signal output (207A) having a pulse width modulated signal output (501B); and
    d. a means (500) for driving the dither motor (244B) in response to the pulse width modulated signal having a dither drive signal connected to the dither motor (244B), **characterized in that** said control means is a microcontroller (100), which comprises
    e. a means (206) for converting the analog dither signal to a digital dither signal (207);
    f. a means (215) for converting the digital dither signal into a digital count signal (209) by multiplying the digital dither signal by a predetermined scale factor:
    g. a means (208) for subtracting a reference displacement count (213) from the digital count signal to generate a differential displacement signal;
    h. a means (210) for injecting random noise into the differential displacement signal to generate a digital drive signal; and
    i. a means (216) for converting the digital drive signal into said pulse width modulated signal (501).

2. Apparatus according to claim 1, **characterized in that** the reference displacement count (213) is dynamically adjusted.

3. Apparatus according to claim 1, **characterized in that** the reference displacement count is corrected by a dither stripper gain adjustment (212).

4. Apparatus according to claim 1, **characterized in that** the reference displacement is corrected by a dither stripper gain adjustment and the reference displacement is dynamically adjusted.

5. Apparatus according to claim 1, **characterized in that** the random noise (211) has a Gaussian distribution or a Normal distribution.

6. Apparatus according to claim 1 further including a power supply (544) which provides a power supply signal, the means (500) for driving the dither motor (244B) comprising:

    a. low pass filtering means (504, 506, 508 and 509) having an output for providing a filtered signal and an input (501) connected to the pulse width modulated drive signal;
    b. a means (516, 510 and 522) for amplifying the filtered signal from the low pass filtering means (504, 506, 508 and 509) having an amplified signal output wherein the amplifying means is coupled at an input to the output of the low pass filtering means; and

c. the dither drive signal responds to the amplified signal output. wherein the driving means (500) includes an active pull-up means (524, 528. 530 and 532) including means (524) for providing a dead band operating characteristic.

7. Apparatus according to claim 6, **characterized in that** the active pull-up means (546) comprises:

a. a first transistor means (530) having a base, collector and emitter;

b. a second transistor means (528) having a base, collector and emitter wherein the collectors of the first and second transistor means (528 and 530) are connected to a voltage source (544) and the emitter of the first transistor means (530) is connected to the base of the second transistor means (528) in a Darlington configuration; and

c. diode means (524) connected at a first terminal to the emitter of the second transistor means (528) and at a second terminal to the base of the first transistor means (530).

8. Apparatus according to claim 1, **characterized in that** the means for sensing the dither pickoff (244A) comprises:

a. a first capacitor (402) in parallel with the dither pickoff (244A) having a first terminal and a second terminal:

b. a first resistor (404) in parallel with the dither pickoff (244A) and first capacitor (402) connected between the first terminal and second terminal;

c. a second capacitor (406) connected to the first terminal and the input of a first amplifier (408) to ac couple the dither pickoff(244A) wherein the second capacitor (406) has a filtered dither output (409);

d. said first amplifier means (408) for amplifying the filtered dither output having an analog dither pickoff output (418), a first input (409) and second input (411) wherein the first input is connected to the filtered dither output and the second input is connected to the analog dither pickoff output (418) through a second resistor (410) and a fourth capacitor (412) connected in parallel and wherein the second input is connected to ground through a third resistor (426); and

e. a second amplifier means (420) for amplifying the analog dither pickoff output (418) having a dither zero crossing detector output (430), a first input (418) and a second input (419) wherein the first input is connected to the analog dither pickoff output (418) and the second input (419) is connected to the dither zero crossing detector output (430) through a fifth resistor (422) and wherein the second input (419) is also connected to ground through a sixth resistor (424).

9. Apparatus according to claim 1 wherein the means for control (100) provides a first pulse width modulated dither drive signal (470) and a second pulse width modulated dither drive signal (472), and wherein the means for driving the dither motor comprises:

a. a first transistor means (450) with a first gate, first source and first drain wherein the first gate is connected to the first pulse width modulated dither drive signal (470) and the first drain is connected to ground;

b. a second transistor means (452) with a second gate, second source and second drain wherein the second gate is connected to the second pulse width modulated dither drive signal (472) and the second drain is connected to ground;

c. a first induction means having a first coil (462) with a first and second terminal and a second coil (460 and 464) with a third and fourth terminal and a center terminal wherein the first terminal (462) is connected to the dither drive signal (462), the second terminal is connected to ground. the center terminal is connected to a voltage supply means (480), the third terminal is connected to the first source and the fourth terminal is connected to the second source:

d. a first diode (454) connected between the third terminal and center terminal: and

e. a second diode (456) connected between the fourth terminal and center terminal.

10. Apparatus according to claim 1, **characterized in that** the pulse width modulated signal (501) is limited to prevent rollover.

11. Apparatus according to claim 1, **characterized in that** the differential displacement signal (209A) is gain adjusted to the magnitude of the random noise.

12. Apparatus according to claim 1, **characterized in that** the means for driving the dither motor further includes a high speed output logic means (216) to drive a first dither leg with a first pulse width modulated signal and a second dither leg with a second pulse width modulated signal.

13. Apparatus according to claim 1 or one of the following claims and having a dither zero crossing detector (820), a read out counter (700), and a system sample strobe DS1, comprising:

a. an edge triggered register means (1220) for latching the read out counter value on the system sample strobe DSI having a latched read out counter output (1222);

b. a first analog to digital conversion means (1212) connected to the dither pickoff (501A) for generating a stripper sample enabled by the system sample strobe (1202);

c. a second analog to digital conversion means (1214) connected to the dither pickoff (501A) for generating a dither drive sample enabled by the dither zero crossing detector (820); and

d. a direct digital control means (100) for controlling the dither motor connected to the stripper sample (1202), and drive sample wherein the direct digital control means (100) provides a direct digital drive signal.

14. Apparatus according to claim 13, further comprising a third analog to digital conversion means (1216) connected to a plurality of multiplexed background signals for generating a background sample enabled by the direct digital dither control means.

15. A direct digital dither drive method using the dither drive apparatus according to claim 1 further including an analog to digital converter scheduling method for a laser gyro wherein the laser gyro further includes a dither stripper sharing the analog to digital conversion, said method comprising the steps of:

a. defining a dither stripping begin time and a dither stripping duration;

b. computing an expected strip time as being the dither stripping begin time plus the dither stripper duration;

c. building a window of predetermined time around the strip time; and

d. calculating whether or not the predetermined analog to digital conversion for the digital dither signal will occur within the window and if it does setting a flag to indicate that the stripper analog to digital conversion will be shared with the drive analog to digital conversion.

16. Method according to claim 15, **characterized in that** the dither stripping begin time includes an analog to digital conversion time.

17. Method according to claim 15, **characterized in that** the analog to digital conversions are phase compensated for time delays in analog signal propagation and digital signal processing.

18. Method according to claim 15, **characterized in that** the dither crosses a point of zero magnitude periodically every dither period and the analog to digital conversion of the digital drive signal occurs at one quarter of the way through the dither period called the 90° dither period sample time and three quarters of the way through the dither period called the 270° dither period sample time.

19. Method according to claim 18, **characterized in that** the method of determining the 90° and 270° dither period sample times comprises the steps of:

a. determining the time of the zero crossing of the dither and defining an interrupt time:

b. accessing a last interrupt time stored from the previous dither period;

c. determining a change in time by subtracting the interrupt time from the last interrupt time;

d. dividing the change in time by four to determine the quarter dither period;

e. calculating the 90° dither period sample time to equal the quarter dither period minus a predetermined phase lead time:

f. calculating the half dither period to be the twice the quarter dither period; and

g. calculating the 270° dither period sample time to equal the sum of the half dither period plus the 90° dither period sample time.

20. Method according to claim 19, **characterized in that** the predetermined phase lead time is equal to the change in time divided by a predetermined compensation constant.

21. A method according to claim 15 or one of the following claims wherein an A/D conversion is arbitrated between a dither drive method. a dither stripper method and a background method, wherein the A/D conversion may also be shared by the dither drive method and dither stripper method, and wherein the arbitration method comprises the steps of:

a. determining whether the A/D conversion was called by the dither drive method, the dither stripper method, the shared dither drive method and the dither stripper method or the background method;

b. storing an A/D value in the dither stripper register if the A/D conversion was called by the dither stripper method or the shared dither stripper method and dither drive method;

c. setting an A/D conversion complete flag for the dither stripper method;

d. driving the dither motor;

e. storing an A/D value in a background register if the A/D conversion was called by the background method; and

f. setting the A/D conversion complete flag for the background method.

22. A method according to claim 21, comprising a timing method to schedule either a dither only analog to digital conversion, shared analog to digital conversion or a background analog to digital conversion, the timing schedule method comprising the steps of:

a. setting a dither only flag in an A/D priority register if the dither only flag is active;
b. setting a dither and stripper flag in the A/D priority register if the dither and stripper flag is active and the dither only flag is inactive; and
c. performing the background analog to digital conversion and storing the result of the background analog to digital conversion in a background A/D conversion register if the stripper conversion will happen within a predetermined window, the dither and stripper flag is inactive and the dither only flag is inactive.

23. A method according to claim 21, wherein a method of determining the system sample clock for the laser gyro dither stripper method comprises the steps of:

a. initializing a counter;
b. capturing a sample clock edge of an external sample clock and generating an interrupt;
c. executing after the interrupt occurs the following steps;
d. storing a count value for the current time;
e. reading an old time from a memory previously stored;
f. computing a delta time to be the old time minus the new time;
g. setting up an A/D conversion in a high speed output logic means;
h. setting the old time to equal the new time and then returning to step (b) to wait for a sample edge.

24. A method according to claim 21, wherein the dither drive method comprising the steps of:

a. sensing the actual displacement of the gyro block;
b. reading a reference displacement of the gyro block previously stored in a memory;
c. computing the difference between the reference displacement and the actual displacement;
d. forming a digital drive signal by adding random noise of a predetermined distribution to the difference;
e. converting the digital drive signal into a pulse width modulation signal; and

f. direct driving the dither motor with the pulse width modulation signal.

**Patentansprüche**

1. Schwing-Antriebsvorrichtung für einen Laserkreisel (10) aufweisend einen schwingenden Kreiselblock (200) mit einem Schwingmotor (244B) und einem Schwingabgriff (244A), wobei die Vorrichtung umfaßt:

a. eine Einrichtung (402,404,406 und 407) zur Erfassung des mit dem Schwingabgriff (244A) verbundenen Schwingabgriffs und mit einem Schwingabgriff-Ausgang (245A);
b. eine Einrichtung (400,202) zur Verstärkung des Schwingabgriff-Ausganges (245A) mit einem verstärkten Schwingabgriff-Ausgang (501A);
c. eine mit dem Schwingsignal-Ausgang (207A) verbundene Steuereinrichtung (100) mit einem impulsbreitenmodulierten Signalausgang (501B); und
d. eine Einrichtung (500) zur Ansteuerung des Schwingmotors (244B) auf Grund des impulsbreitenmodulierten Signales und mit einem mit dem Schwingmotor (244B) verbundenen Schwing-Ansteuersignal,

**dadurch gekennzeichnet,** daß die Steuereinrichtung ein Mikrokontroller (100) ist, welcher umfaßt

e. eine Einrichtung (206) zur Umwandlung des analogen Schwingsignales in ein digitales Schwingsignal (207);
f. eine Einrichtung (215) zur Umwandlung des digitalen Schwingsignales in ein digitales Zählsignal (209) durch multiplizieren des digitalen Schwingsignales mit einem vorbestimmten Skalenfaktor;
g. eine Einrichtung (208) zum Subtrahieren eines Referenz-Verschiebezählstandes (213) von dem digitalen Zählsignal, um ein Differential-Verschiebesignal zu erzeugen;
h. eine Einrichtung (210) zum Injizieren von statistischem Rauschen in das Differential-Verschiebesignal. um ein digitales Ansteuersignal zu erzeugen; und
i. eine Einrichtung (216) zur Umwandlung des digitalen Ansteuersignales in das impulsbreitenmodulierte Signal (501).

2. Vorrichtung nach Anspruch 1, **dadurch gekennzeichnet,** daß der Referenz-Verschiebezählstand (213) dynamisch eingestellt wird.

3. Vorrichtung nach Anspruch 1, **dadurch gekenn-**

**zeichnet,** daß der Referenz-Verschiebezählstand durch eine SchwingunterdrückungsVerstärkungseinstellung (212) korrigiert wird.

4. Vorrichtung nach Anspruch 1, **dadurch gekennzeichnet,** daß der Referenz-Verschiebezählstand durch eine Schwingunterdrückungs-Verstärkungseinstellung (212) korrigiert wird und die Referenzverschiebung dynamisch eingestellt wird.

5. Vorrichtung nach Anspruch 1, **dadurch gekennzeichnet,** daß das statistische Rauschen (211) eine Gauss'sche Verteilung oder eine Normalverteilung besitzt.

6. Vorrichtung nach Anspruch 1, ferner umfassend eine Spannungsversorgung (544), welche ein Spannungs-Versorgungssignal liefert, wobei die Einrichtung (500) zur Ansteuerung des Schwingmotors (244B) umfaßt:

a. eine Tiefpaß-Filtereinrichtung (504, 506, 508 und 509) mit einem Ausgang zur Vorgabe eines gefilterten Signales und einem Eingang (501), der mit dem impulsbreitenmodulierten Ansteuersignal verbunden ist;
b. eine Einrichtung (516,510 und 522) zur Verstärkung des gefilterten Signales von der Tiefpaß-Filtereinrichtung (504,506.508 und 509) mit einem verstärkten Signalausgang, wobei die Verstärkungseinrichtung an einem Eingang mit dem Ausgang der Tiefpaß-Filtereinrichtung verbunden ist; und c. ein Ansprechen des Schwing-Ansteuersignales auf den verstärkten Signalausgang, wobei die Ansteuereinrichtung (500) eine aktive Hochzieheinrichtung (524,528,530 und 532) umfaßt, die Mittel (524) zur Vorgabe einer Totband-Betriebscharakteristik aufweist.

7. Vorrichtung nach Anspruch 6, **dadurch gekennzeichnet,** daß die Hochzieheinrichtung (546) umfaßt:

a. einen ersten Transistor (530) mit einer Basis. einem Kollektor und einem Emitter;
b. einen zweiten Transistor (528) mit einer Basis, einem Kollektor und einem Emitter wobei die Kollektoren der ersten und zweiten Transistoren (528 und 530) an eine Spannungsquelle (544) angeschlossen sind und der Emitter des ersten Transistors (530) mit der Basis des zweiten Transistors (528) in einer Darlington-Konfiguration verbunden ist; und
c. eine Diode (524), die mit einem ersten Anschluß an den Emitter des zweiten Transistors (528) und mit einem zweiten Anschluß an die Basis des ersten Transistors (530) angeschlossen ist.

8. Vorrichtung nach Anspruch 1, **dadurch gekennzeichnet,** daß die Einrichtung zur Erfassung des Schwingabgriffes (244A) umfaßt:

a. einen ersten Kondensator (402) parallel zu dem Schwingabgriff (244A) mit einem ersten Anschluß und einem zweiten Anschluß;
b. einen ersten Widerstand (404) parallel zu dem Schwingabgriff (244A) und zu dem ersten Kondensator (402), der zwischen dem ersten Anschluß und dem zweiten Anschluß angeordnet ist;
c. einen zweiten Kondensator (406), der an den ersten Anschluß und den eingang eines ersten Verstärkers (408) angeschlossen ist, um wechselspannungsmäßig den Schwingabgriff (244A) anzuschließen, wobei der zweite Kondensator (406) einen gefilterten Schwingausgang (409) besitzt;
d. wobei der erste Verstärker (408) zur Verstärkung des gefilterten Schwingausganges einen analogen Schwing-Abgriffausgang (418), einen ersten Eingang (409) und einen zweiten Eingang (411) besitzt, wobei der erste Eingang an den gefilterten Schwingausgang angeschlossen ist und der zweite Eingang an den analogen Schwing-Abgriffausgang (418) über einen zweiten Widerstand (410) angeschlossen ist und ein vierter Kondensator (412) parallelgeschaltet ist und wobei der zweite Eingang über einen dritten Widerstand (426) mit Masse verbunden ist; und
e. wobei ein zweiter Verstärker (420) zur Verstärkung des analogen Schwing-Abgriffausganges (418) einen Schwing-Nulldurchgangs-Detektorausgang (430), einen ersten Eingang (418) und einen zweiten Eingang (419) besitzt,

wobei der erste Eingang an den analogen Schwing-Abgriffausgang (418) angeschlossen ist und der zweite Eingang (419) an den Schwing-Nulldurchgangs-Detektorausgang (430) über einen fünften Widerstand (422) angeschlossen ist und wobei der zweite Eingang (419) ebenfalls über einen sechsten Widerstand (424) mit Masse verbunden ist.

9. Vorrichtung nach Anspruch 1, wobei die Einrichtung zur Steuerung (100) ein erstes impulsbreitenmoduliertes Schwing-Ansteuersignal (470) und ein zweites impulsbreitenmoduliertes Schwing-Ansteuersignal (472) liefert und wobei die Einrichtung zur Ansteuerung des Schwingmotors umfaßt:

a. einen ersten Transistor (450) mit einer ersten Steuerelektrode, einer ersten Quelle und einer ersten Senke, wobei die erste Steuerelektrode an das erste impulsbreitenmodulierte Schwing-Ansteuersignal (470) angeschlossen ist und die erste Senke mit Masse verbunden ist;

b. einen zweiten Transistor (452) mit einer zweiten Steuerelektrode, einer zweiten Quelle und einer zweiten Senke, wobei die zweite Steuerelektrode an das zweite impulsbreitenmodulierte Schwing-Ansteuersignal (472) angeschlossen ist und die zweite Senke mit Masse verbunden ist;

c. eine erste Induktionseinrichtung mit einer ersten Spule (462) mit einem ersten und zweiten Anschluß und einer zweiten Spule (460 und 464) mit einem dritten und einem vierten Anschluß und einem Mittelanschluß, wobei der erste Anschluß (462) an das Schwing-Ansteuersignal (462) angeschlossen ist, der zweite Anschluß mit Masse verbunden ist, der Mittelanschluß an eine Spannungsversorgungseinrichtung (480) angeschlossen ist, der dritte Anschluß mit der ersten Quelle verbunden ist und der vierte Anschluß mit der zweiten Quelle verbunden ist;

d. eine erste Diode (454), die zwischen dem dritten Anschluß und dem Mittelanschluß angeschlossen ist; und

e. eine zweite Diode (456), die zwischen dem vierten Anschluß und dem Mittelanschluß angeschlossen ist.

10. Vorrichtung nach Anspruch 1, **dadurch gekennzeichnet,** daß das impulsbreitenmodulierte Signal (501) begrenzt ist, um ein Überschlagen zu verhindern.

11. Vorrichtung nach Anspruch 1, **dadurch gekennzeichnet,** daß das Differential-Verschiebesignal (209A) in seiner Größe auf das statistische Rauschen eingestellt ist.

12. Vorrichtung nach Anspruch 1, **dadurch gekennzeichnet**, daß die Einrichtung zur Ansteuerung des Schwingmotors ferner eine Hochgeschwindigkeits-Ausgangs-Logikeinrichtung (216) zur Ansteuerung eines ersten Schwinganschlusses mit einem ersten impulsbreitenmodulierten Signal und eines zweiten Schwinganschlusses mit einem zweiten impulsbreitenmodulierten Signal aufweist.

13. Vorrichtung nach Anspruch 1 oder einem der folgenden Ansprüche mit einem Schwing-Nulldurchgangsdetektor (820), einem Auslesezähler (700) und einem System-Abtastimpuls DSI, aufweisend:

a. eine flankengetriggerte Registereinrichtung (1220) zur Verriegelung des Wertes des Auslesezählers bei dem SystemAbtastimpuls DSI mit einem verriegelten Auslesezähler-Ausgang (1222);

b. eine erste Analog/Digital-Wandlereinrichtung (1212), die mit dem Schwingabgriff (501A) verbunden ist, um einen Abstreif-Tastimpuls zu erzeugen. der durch den System-Abtastimpuls (1202) freigegeben wird;

c. eine zweite Analog/Digital-Wandlereinrichtung (1214), die mit dem Schwingabgriff (501A) verbunden ist, um einen Schwingantrieb-Tastimpuls zu erzeugen, der durch den Schwing-Nulldurchgangsdetektor (820) freigegeben wird; und

d. eine direkte digitale Steuereinrichtung (100) für die Steuerung des Schwingmotors, die an den Abstreif-Abtastimpuls (1202) und den Ansteuer-Abtastimpuls angeschlossen ist, wobei die direkte digitale Steuereinrichtung 100) ein direktes digitales Ansteuersignal liefert.

14. Vorrichtung nach Anspruch 13. ferner umfassend eine dritte Analog/DigitalWandlereinrichtung (1216), die an eine Vielzahl von Multiplex-Hintergrundsignalen angeschlossen ist, um einen Hintergrund-Abtastimpuls zu erzeugen, der durch die direkte digitale Schwing-Steuereinrichtung freigegeben wird.

15. Direktes digitales Schwing-Ansteuerverfahren unter Verwendung der Schwing-Ansteuervorrichtung nach Anspruch 1, ferner umfassend ein Analog/Digital-Wandler-Planungsverfahren für einen Laserkreisel, wobei der Laserkreisel ferner eine die Analog/Digital-Wandlung mitbenutzende Schwingunterdrückung aufweist und das Verfahren die Schritte umfaßt:

a. Definition einer Schwingunterdrückungs-Beginnzeit und einer Schwingunterdrückungsdauer;

b. Berechnung einer erwarteten Unterdrückungszeit als die Schwingunterdrückungs-Beginnzeit plus die Schwingunterdrückungsdauer;

c. Errichtung eines Fensters vorbestimmter Zeit um die Unterdrückungszeit; und

d. Berechnung, ob die vorbestimmte Analog/Digital-Wandlung für das digitale Schwingsignal innerhalb des Fensters auftritt oder nicht und, falls es auftritt, Setzen eines Hinweises, um anzuzeigen, daß die Analog/Digital-Wandlung der Unterdrückung gemeinsam mit der Analog/Digital-Wandlung der Ansteuerung benutzt wird.

16. Verfahren nach Anspruch 15, **dadurch gekennzeichnet**, daß die Schwingunterdrückungs-Beginnzeit eine Analog/Digital-Wandlerzeit umfaßt.

**17.** Verfahren nach Anspruch 15, **dadurch gekennzeichnet**, daß die Analog/Digital-Wandlungen phasenkompensiert für Zeitverzögerungen in der analogen Signalfortpflanzung und der digitalen Signalverarbeitung sind.

**18.** Verfahren nach Anspruch 15, **dadurch gekennzeichnet,** daß die Schwingung einen Punkt mit der Größe Null periodisch bei jeder Schwingperiode durchquert und die Digital/Analog-Wandlung des digitalen Ansteuersignales bei einem Viertel des Weges durch die Schwingungsperiode auftritt, was als 90° Schwingperioden-Abtastzeit bezeichnet wird, und bei Dreiviertel des Weges durch die Schwingperiode auftritt, was als 270° Schwingperioden-Abtastzeit bezeichnet wird.

**19.** Verfahren nach Anspruch 18, **dadurch gekennzeichnet,** daß das Verfahren zur Bestimmung der 90°- und 270°-Schwingperioden-Abtastzeiten die Schritte umfaßt:

a. Bestimmung der Zeit des Nulldurchganges der Schwingung und Definition einer Interruptzeit;
b. Zugriff auf eine letzte Interruptzeit, die aus der vorangegangenen Schwingperiode gespeichert ist;
c. Bestimmung einer Zeitänderung durch Subtrahieren der Interruptzeit von der letzten Interruptzeit;
d. Teilung der Änderungszeit durch vier, um ein Viertel der Schwingperiode zu bestimmen;
e. Berechnung der 90°-Schwingperioden-Abtastzeit entsprechend dem Viertel der Schwingperiode minus einer vorbestimmten Phasen-Vorauseilzeit;
f. Berechnung der halben Schwingperiode als das Doppelte der Viertel-Schwingperiode; und
g. Berechnung der 270°-Schwingperioden-Abtastzeit aus der Summe der halben Schwingperiode plus der 90°-Schwingperioden-Abtastzeit.

**20.** Verfahren nach Anspruch 19, **dadurch gekennzeichnet,** daß die vorbestimmte Phasen-Vorauseilzeit der Zeitänderung, geteilt durch eine vorbestimmte Kompensationskonstante, entspricht.

**21.** Verfahren nach Anspruch 15 oder einem der folgenden Ansprüche, wobei eine A/D-Wandlung von einem Schwing-Ansteuerverfahren, einem Schwing-Unterdrückungsverfahren und einem Hintergrundverfahren gemeinsam benutzt wird, wobei die A/D-Wandlung ebenfalls durch das Schwing-Ansteuerverfahren und das Schwing-Unterdrückungsverfahren gemeinsam benutzt wird und wobei das Aufteilungsverfahren die Schritte umfaßt:

a. Feststellung, ob die A/D-Wandlung durch das Sching-Ansteuerverfahren, das Schwing-Unterdrückungsverfahren, das gemeinsame Schwing-Ansteuerverfahren und das Schwing-Unterdrückungsverfahren oder das Hintergrundverfahren aufgerufen wurde;
b. Speicherung eines A/D-Wertes in dem Schwing-Unterdrückungsregister, wenn die durch durch das Schwing-Unterdrückungsverfahren oder das gemeinsame Schwing-Unterdrückungsverfahren und das Schwing-Ansteuerverfahren aufgerufen wurde;
c. Setzen eines Hinweises für eine vollständige A/D-Wandlung des Schwing-Unterdrückungsverfahrens;
d. Ansteuerung des Schwingmotors;
e. Speicherung eines A/D-Wertes in einem Hintergrundregister. wenn die A/D-Wandlung durch das Hintergrundverfahren aufgerufen wurde; und
f. Setzen eines Hinweises für die vollständige A/D-Wandlung des Hintergrundverfahrens.

**22.** Verfahren nach Anspruch 21, umfassend ein Zeitgeberverfahren zur Planung entweder einer Analog/Digital-Wandlung nur für die Schwingung, einer gemeinsamen Analog/Digital-Wandlung oder einer Analog/Digital-Wandlung für den Hintergrund, wobei das Zeitgeber-Planungsverfahren die Schritte umfaßt:

a. Setzen eines Hinweises nur für die Schwingung in einem A/D-Prioritätsregister, wenn der Hinweis nur für die Schwingung aktiv ist;
b. Setzen eines Hinweises für eine Schwingung und eine Unterdrückung in dem A/D-Prioritätsregister, wenn der Hinweis für die Schwingung und die Unterdrückung aktiv ist und der Hinweis nur für die Schwingung inaktiv ist; und
c. Ausführung der Analog/Digital-Wandlung für den Hintergrund und Speicherung des Ergebnisses der Analog/Digital-Wandlung für den Hintergrund in einem A/D-Hintergrund-Wandlerregister, wenn die Unterdrückungsumwandlung innerhalb eines vorbestimmten Fensters auftritt. der Hinweis für die Schwingung und die Unterdrückung inaktiv ist und der Hinweis nur für die Schwingung inaktiv ist.

**23.** Verfahren nach Anspruch 21, wobei ein Verfahren zur Bestimmung des System-Abtasttaktes für das Laserkreisel-Schwing-Unterdrückungsverfahren die Schritte umfaßt:

a. Auslösung eines Zählers;
b. Erfassen einer Kante des Abtasttaktes eines externen Abtasttaktes und Erzeugung eines Interrupts;

c. Ausführung der folgenden Schritte, nachdem der Interrupt aufgetreten ist;

d. Speicherung eines Zählstandswertes für die laufende Zeit;

e. Lesen einer alten Zeit, die zuvor in einem Speicher gespeichert wurde;

f. Berechnung einer Deltazeit als die alte Zeit minus der neuen Zeit;

g. Bildung einer A/D-Wandlung in einer Hochgeschwindigkeits-Ausgangslogikeinrichtung;

h. Setzen der alten Zeit auf die neue Zeit und sodann Rückkehr zum Schritt (b), um auf eine Abtastkante zu warten.

24. Verfahren nach Anspruch 21, wobei das Schwing-Ansteuerverfahren die Schritte umfaßt:

a. Erfassung der tatsächlichen Verschiebung des Kreiselblockes;

b. Auslesen einer Referenz-Verschiebung des Kreiselblockes, die zuvor in einem Speicher gespeichert wurde;

c. Berechnung der Differenz zwischen der Referenz-Verschiebung und der tatsächlichen Verschiebung;

d. Bildung eines digitalen Ansteuersignales durch Addition von statistischem Rauschen einer vorbestimmten Verteilung zu der Differenz;

e. Umwandlung des digitalen Ansteuersignales in ein impulsbreitenmoduliertes Signal; und

f. direkte Ansteuerung des Schwingmotors mit dem impulsbreitenmodulierten Signal.

**Revendications**

1. Dispositif de commande d'activation pour un gyroscope à laser (10) comportant un bloc gyroscopique activé (200) équipé d'un moteur d'activation (244B) et un capteur d'activation (244A), ledit dispositif comprenant :

a. des moyens de détection (402, 404, 406 et 407) pour le capteur d'activation, connectés au capteur d'activation (244A), et délivrant un signal de sortie (245A) du capteur d'activation ;

b. des moyens (400, 202) pour amplifier le signal de sortie (245A) du capteur d'activation et délivrant un signal de sortie amplifié (501A) du capteur d'activation ;

c. des moyens de commande (100) connectés à la sortie (207A) du signal d'activation et comportant une sortie (501B) délivrant un signal modulé selon une modulation d'impulsions en durée ; et

d. des moyens (500) pour commander le moteur d'activation (244B) en réponse au signal modulé selon une modulation d'impulsions en durée et délivrant un signal de commande d'activation appliqué au moteur d'activation (244B) ;

caractérisé en ce que lesdits moyens de commande sont un microcontrôleur (100) qui comprend :

e. des moyens (206) pour convertir le signal d'activation analogique en un signal d'activation numérique (207) ;

f. des moyens (215) pour convertir le signal d'activation numérique en un signal de comptage numérique (209) par multiplication du signal d'activation numérique par un facteur d'échelle prédéterminé ;

g. des moyens (208) pour soustraire un comptage de déplacement de référence (213), du signal de comptage numérique pour produire un signal de déplacement différentiel ;

h. des moyens (210) pour injecter un bruit aléatoire dans le signal de déplacement différentiel pour produire un signal de commande numérique ; et

i. des moyens (216) pour convertir le signal de commande numérique en ledit signal (501) modulé selon une modulation d'impulsions en durée.

2. Dispositif selon la revendication 1, caractérisé en ce que le comptage de déplacement de référence (213) est réglé de façon dynamique.

3. Dispositif selon la revendication 1, caractérisé en ce que le comptage de déplacement de référence est corrigé par un dispositif (212) de réglage du gain de suppression d'activation.

4. Dispositif selon la revendication 1, caractérisé en ce que le déplacement de référence est corrigé par un dispositif de réglage du gain de suppression d'activation et le déplacement de référence est réglé de façon dynamique.

5. Dispositif selon la revendication 1, caractérisé en ce que le bruit aléatoire (211) possède une distribution gaussienne ou une distribution normale.

6. Dispositif selon la revendication 1, comprenant en outre une alimentation en énergie (544), qui délivre un signal d'alimentation en énergie, les moyens (500) pour commander le moteur d'activation (244B) comprenant:

a. des moyens formant filtre passe-bas (504, 506, 508 et 509) comportant une sortie servant à délivrer un signal filtré et une entrée (501) qui reçoit le signal de commande modulé selon une modulation d'impulsions en durée ;

b. des moyens (516, 510 et 522) pour amplifier le signal filtré délivré par les moyens formant filtre passe-bas (504, 506, 508 et 509) comportant une sortie pour le signal amplifié, une entrée des moyens amplificateurs étant couplée à la sortie des moyens formant filtre passe-bas ; et

c. le signal de commande d'activation répond au signal de sortie amplifié, les moyens de commande (500) comprenant des moyens élévateurs actifs (524, 528, 530 et 532) comprenant des moyens (524) pour délivrer une caractéristique de fonctionnement de zone morte.

7. Dispositif selon la revendication 6, caractérisé en ce que les moyens élévateurs actifs (546) comprennent :

a. des premiers moyens formant transistor (530) comportant une base, un collecteur et un émetteur ;

b. des seconds moyens formant transistor (528) comportant une base, un collecteur et un émetteur, les collecteurs des premiers et seconds moyens formant transistors (528 et 530) étant connectés à une source de tension (544) et l'émetteur des premiers moyens formant transistor (530) étant connecté à la base des seconds moyens formant transistor (528) selon une configuration de Darlington ; et

c. des moyens formant diode (524) connectés par une première borne à l'émetteur des seconds moyens formant transistor (528) et par une seconde borne à la base des premiers moyens formant transistor (530).

8. Dispositif selon la revendication 1, caractérisé en ce que les moyens de détection du capteur d'activation (244A) comprennent :

a. un premier condensateur (402) en parallèle avec le capteur d'activation (244A) et comportant une première borne et une seconde borne ;

b. une première résistance (404) en parallèle avec le capteur d'activation (244A) et le premier condensateur (402), branchée entre la première borne et la seconde borne ;

c. un second condensateur (406) connecté à la première borne et à l'entrée d'un premier amplificateur (408) de manière à coupler, en courant alternatif, le capteur d'activation (244A), le second condensateur (406) délivrant une sortie (409) du signal d'activation filtré ;

d. lesdits premiers moyens amplificateurs (408) servant à amplifier le signal de sortie d'activation filtré et comportant une sortie (418) de signal analogique du capteur d'activation, une première entrée (409) et une seconde entrée (411), la première entrée étant connectée à la sortie de signal d'activation filtré et la seconde entrée étant connectée à la sortie (418) de signal analogique du capteur d'activation, par l'intermédiaire d'une seconde résistance (410) et d'un quatrième condensateur (412), branchés en parallèle, et la seconde entrée étant connectée à la masse par l'intermédiaire d'une troisième résistance (426) ; et

e. des seconds moyens amplificateurs (420) pour amplifier le signal analogique de sortie (418) du capteur d'activation et délivrant un signal de sortie (430) d'un détecteur de passage par zéro de l'activation, une première entrée (418) et une seconde entrée (419), la première entrée étant raccordée à la sortie (418) du signal analogique du capteur d'activations, et la seconde entrée (419) étant connectée à la sortie (430) du détecteur de passage par zéro de l'activation, par l'intermédiaire d'une cinquième résistance (422), et la seconde entrée (419) étant également connectée à la masse par l'intermédiaire d'une sixième résistance (424).

9. Dispositif selon la revendication 1, dans lequel les moyens de commande (100) délivrent un premier signal de commande d'activation (470) modulé selon une modulation d'impulsions en durée et un second signal de commande d'activation (472) modulé selon une modulation d'impulsions en durée, et dans lequel les moyens pour commander le moteur d'activation comprennent :

a. des premiers moyens formant transistor (450) comprenant une première grille, une première source et un premier drain, la première grille recevant le signal de commande d'activation (470) modulé selon une modulation d'impulsions en durée et le premier drain étant connecté à la masse ;

b. des seconds moyens formant transistor (452) comportant une seconde grille, une seconde source et un second drain, la seconde grille recevant le second signal de commande d'activation (472) modulé selon une modulation d'impulsions en durée et le second drain étant connecté à la masse ;

c. des premiers moyens d'induction comprenant une première bobine (462) possédant des première et seconde bornes et une seconde bobine (460 et 464) comportant des troisième et quatrième bornes et une borne centrale, la première borne (462) recevant le signal de commande d'activation (462), la seconde borne étant connectée à la masse, la borne centrale étant connectée à des moyens d'alimentation en tension (480), la troisième borne étant connectée à la première source et la quatrième borne étant connectée à la seconde source ;

d. une première diode (454) connectée entre la troisième borne et la borne centrale ; et

e. une seconde diode (456) connectée entre la quatrième borne et la borne centrale.

10. Dispositif selon la revendication 1, caractérisé en ce que le signal (501) modulé selon une modulation d'impulsions en durée est limité pour empêcher un retournement.

11. Dispositif selon la revendication 1, caractérisé en ce que le gain du signal de déplacement différentiel (209A) est réglé sur l'amplitude du bruit aléatoire.

12. Dispositif selon la revendication 1, caractérisé en ce que les moyens pour commander le moteur d'activation comprennent en outre des moyens logiques de sortie à grande vitesse (216) pour commander une première branche d'activation avec un premier signal modulé selon une modulation d'impulsions en durée et une seconde branche d'activation avec un second signal modulé selon une modulation d'impulsions en durée.

13. Dispositif selon la revendication 1 ou l'une quelconque des revendications suivantes et comportant un détecteur (820) de passage par zéro de l'activation, un compteur de lecture (700) et un dispositif DSI d'échantillonnage du système, comprenant :

a. des moyens formant registre (1220), déclenchés par les flancs d'impulsions, pour verrouiller la valeur de compteur de lecture dans le dispositif DSI d'échantillonnage du système, ayant un signal de sortie verrouillé (1222) de compteur de lecture ;

b. des premiers moyens de conversion analogique/numérique (1212) connectés au capteur d'activation (501A) pour produire un échantillon d'élimination autorisé par le dispositif d'échantillonnage (1202) du système ;

c. des seconds moyens de conversion analogique/numérique (1214) connectés au capteur d'activation (501A) pour produire un échantillon de commande d'activation autorisé par le détecteur (820) de passage par zéro de l'activation ; et

d. des moyens de commande numérique directe (100) pour commander le moteur d'activation recevant l'échantillon d'élimination (1202) et l'échantillon de commande, les moyens de commande numérique directe (100) délivrant un signal de commande numérique directe.

14. Dispositif selon la revendication 13, comportant en outre des troisièmes moyens de conversion analogique/numérique (1216) connectés à une pluralité de signaux de base multiplexés pour produire un échantillon de base autorisé par les moyens de commande numérique directe d'activation.

15. Procédé de commande numérique directe d'activation utilisant le dispositif de commande d'activation selon la revendication 1, incluant en outre un procédé de programmation d'un convertisseur analogique/numérique pour un gyroscope à laser, selon lequel le gyroscope à laser comprend en outre un dispositif de suppression de l'activation utilisant conjointement la conversion analogique/numérique, ledit procédé comprenant les étapes consistant à :

a. définir une durée de démarrage de suppression de l'activation et une durée de suppression de l'activation ;

b. calculer une durée de suppression attendue comme étant la durée de démarrage de suppression de l'activation plus la durée de suppression de l'activation ;

c. construire une fenêtre d'un intervalle de temps prédéterminé autour de la durée de suppression ; et

d. calculer si la conversion analogique/numérique prédéterminée pour le signal d'activation numérique apparaît ou non dans la fenêtre et, si c'est le cas, régler un drapeau indiquant que la conversion analogique/numérique du signal de suppression est partagé en commun avec la conversion analogique/numérique de commande.

16. Procédé selon la revendication 15, caractérisé en ce que la durée de départ de suppression de l'activation inclut une durée de conversion analogique/numérique.

17. Procédé selon la revendication 15, caractérisé en ce que les conversions analogique/numérique sont soumises à une compensation de phase servant à compenser des retards dans la propagation des signaux analogiques et dans le traitement des signaux numériques.

18. Procédé selon la revendication 15, caractérisé en ce que l'activation passe périodiquement par un point d'amplitude zéro, lors de chaque période de l'activation, et que la conversion analogique/numérique du signal de commande numérique s'effectue à un quart de la durée de la période d'activation, désigné comme étant la durée d'échantillonnage de la période d'activation de 90°, et aux trois quarts de la période d'activation, désignés comme étant la durée d'échantillonnage de la période d'activation de 270°.

**19.** Procédé selon la revendication 18, caractérisé en ce que le procédé de détermination des durées d'échantillonnage de la période d'activation de 90° et de 270° comprend les étapes consistant à :

a. déterminer l'instant du passage par zéro de l'activation et définir un instant d'interruption ;
b. accéder à une dernière durée d'interruption mémorisée avant la période précédente d'activation ;
c. déterminer une variation de temps par soustraction de la durée d'interruption, de la dernière durée d'interruption ; et
d. diviser la variation de temps par quatre pour déterminer le quart de la période d'activation ;
e. calculer la durée d'échantillonnage de la période d'activation de 90° comme étant égale au quart de la période d'activation moins un temps d'avance de phase prédéterminé ;
f. calculer la moitié de la période d'activation comme étant égale au double du quart de la période d'activation ; et
g. calculer la durée d'échantillonnage de la période d'activation de 270° comme étant égale à la somme de la moitié de la période d'activation plus la durée d'échantillonnage de la période d'activation de 90°.

**20.** Procédé selon la revendication 19, caractérisé en ce que le temps d'avance de phase prédéterminé est égal à la variation dans le temps divisée par une constante de compensation prédéterminée.

**21.** Procédé selon la revendication 15 ou l'une quelconque des revendications suivantes, selon lequel une conversion analogique/numérique est arbitrée entre un procédé de commande d'activation, un procédé de suppression d'activation et un procédé de base, la conversion analogique/numérique pouvant être également partagée entre le procédé de commande d'activation et le procédé de suppression d'activation, et selon lequel le procédé d'arbitrage comprend les étapes consistant à :

a. déterminer si la conversion analogique/numérique a été appelée par le procédé de commande d'activation, par le procédé de suppression d'activation, par le procédé de commande d'activation utilisé de façon partagé et le procédé de suppression d'activation ou le procédé de base ;
b. mémoriser une valeur analogique/numérique dans le registre de suppression d'activation si la conversion analogique/numérique a été appelée par le procédé de suppression d'activation ou le procédé de suppression d'activation et le procédé de commande d'activation partagés ;

c. régler un drapeau de conversion analogique/numérique achevée pour le procédé de suppression d'activation ;
d. commander le moteur d'activation ;
e. mémoriser une valeur analogique/numérique dans un registre de base sur la conversion analogique/numérique a été appelé au moyen du procédé de base ; et
f. régler le drapeau de conversion analogique/numérique terminée pour le procédé de base.

**22.** Procédé selon la revendication 21, comprenant un procédé de cadencement pour programmer une conversion analogique/numérique de l'activation seule, une conversion analogique/numérique réalisée en commun ou une conversion analogique/numérique de base, le procédé de programmation de cadencement comprenant les étapes consistant à :

a. positionner un drapeau uniquement d'activation dans un registre analogique/numérique de priorité si le drapeau d'activation seule est actif;
b. positionner un drapeau d'activation et de suppression dans le registre analogique/numérique de priorité si le drapeau d'activation et le drapeau de suppression sont actifs et que le drapeau d'activation seule est inactif ; et
c. exécuter la conversion analogique/numérique de base et mémoriser le résultat la conversion analogique/numérique de base dans un registre de conversion analogique/ numérique de base si la conversion de suppression se produit à l'intérieur d'une fenêtre prédéterminée, si le drapeau d'activation et de suppression est inactif et si le drapeau d'activation seule est inactif.

**23.** Procédé selon la revendication 21, dans lequel un procédé de détermination du signal d'horloge d'échantillonnage du système pour le procédé de suppression de l'activation du gyroscope à laser comprend les étapes consistant à :

a. initialiser un compteur ;
b. capter un flanc d'un signal d'horloge d'échantillonnage externe et produire une interruption ;
c. exécuter les étapes indiquées ci-après, une fois apparue l'interruption ;
d. mémoriser une valeur de comptage pour l'instant actuel ;
e. lire un temps ancien dans une mémoire dans laquelle il a été mémorisé auparavant;
f. calculer un intervalle de temps de manière qu'il soit égal au temps ancien moins le nouveau temps ;
g. exécuter une conversion analogique/numérique dans des moyens logiques de sortie à grande vitesse ;

h. régler le temps ancien égal au nouveau temps, puis revenir au pas (b) pour attendre un flanc de l'échantillon.

24. Procédé selon la revendication 21, dans lequel le procédé de commande d'activation comprend les étapes consistant à :

a. détecter le déplacement actuel du bloc gyroscopique ;
b. lire un déplacement de référence du bloc gyroscopique, mémorisé auparavant dans une mémoire ;
c. calculer la différence entre le déplacement de référence et le déplacement réel ;
d. former un signal de commande numérique en ajoutant un bruit aléatoire ayant une distribution prédéterminée à la différence ;
e. convertir le signal de commande numérique en un signal modulé selon une modulation d'impulsions en durée ;
f. commander directement le moteur d'activation avec le signal de modulation d'impulsions en durée.

Fig.1

Fig.2

EP 0 690 973 B1

Fig.3

EP 0 690 973 B1

EP 0 690 973 B1

Fig.4

Fig.5a

EP 0 690 973 B1

Fig.5b

EP 0 690 973 B1

Fig.5c

EP 0 690 973 B1

Fig.5d

EP 0 690 973 B1

Fig.6

START

INTERRUPT GENERATED — 902

TIME CAPTURED AT EDGE OF INTERRUPT — 906

STORE TIME — 908

FORM ΔT — 910

COMPUTE QUADRANTS
$Q1 = \Delta T/4$ — 912

CALCUATE PHASE LEAD COMPENSATION
$T_{PL} = \Delta T/K_{PL}$
$Q1_{PL} = Q1 - T_{PL}$ — 914

CALCULATE Q2
$Q2 = Q1 + Q1$ — 916

CALCULATE Q3
$Q3 = Q2 + Q1_{PL}$ — 918

CHECK FOR BACKGROUND A/D CONVERSION — SCHEDULE SOFTWARE TIMER FLAG AND INTERRUPT TO RESOLVE A/D ARBITRATION — 915

ARBITRATE A/D CONVERSIONS — 919

END — 920

Fig.7

701

START

702

SEND DITHER STRIPPER CONVERSION
TIME—FROM ANOTHER PROCESS

704

COMPUTE EXPECTED STRIPPER TIME
HSITIMEN2 = HSITIMEN1+HSIDELTA

706

BUILD WINDOW AROUND HSITIMEN2
FOR A/D LOCKOUT FOR DITHER
DRIVE

708

CALCULATE WHETHER AN A/D
DITHER DRIVE CONVERSION WILL
OCCUR IN THE WINDOW

712

SET FLAG TO
SHARE STRIPPER
WITH DRIVE AT
Q1 AND Q3

YES

NO

710

SCHEDULE A/D CONVERSION AT
Q1 AND Q3 PHASE COMPENSATED

714

END

*Fig.8*

302
DITHER
STRIPPER

304
COMPENSATE
ΔΦ DATA AND
DITHER PICKOFF
DEGRADATION

306
PERFORM I/O
SETUP PTS
SETUP GO

308
BIAS DRIFT
IMPROVEMENT
RANDOM DRIFT
IMPROVEMENT

390

309
SCHEDULE
BACKGROUND
A/D CONVERSION

310
PROCESS $E^2$
COMMAND

312
BIT
FUNCTIONS

314
CHECK MODE
LIMITS

315
GYRO LIFE
CHECK

Fig.9

START — 821

ENTER FROM A/D
CONVERSION INTERRUPT — 822

READ "REFERENCE"
DISPLACEMENT STORED IN RAM — 824

CORRECT REFERENCE BASED ON
DITHER STRIPPER GAIN ADJUSTMENT — 825

COMPUTE ERROR REF – DISP — 826

MULTIPLY BY GAIN FACTOR — 828

INJECT RANDOM NOISE — 830

PWM LIMIT — 832

PWM DRIVE — 834

END — 836

*Fig.10*

Fig.11

EP 0 690 973 B1

START ⌐1000

FETCH SOFTWARE
TIMER FLAGS ⌐1002

DITHER DRIVE A/D CONVERSION
ONLY SENT FLAG SET? ⌐1004 → YES

NO

DITHER DRIVE AND DITHER
STRIPPER SHARED A/D
CONVERSION FLAG SET? ⌐1006

YES ←

NO

CHECK DITHER STRIPPER
A/D CONVERSION WINDOW ⌐1008

SET SHARE
DITHER DRIVE
AND DITHER
STRIPPER A/D
CONVERSION
FLAG IN A/D
PRIORITY
REGISTER ⌐1018

SET DITHER
DRIVE A/D ONLY
CONVERSION
FLAG IN A/D
PRIORITY
REGISTER ⌐1020

DITHER STRIPPER A/D
CONVERSION TO HAPPEN
WITHIN WINDOW? ⌐1010 → YES

NO

START BACKGROUND A/D
CONVERSION ⌐1012

BACKGROUND A/D
CONVERSION COMPLETE? ⌐1014

NO ←

YES

STORE CONVERTED VALUE
IN BACKGROUND A/D COMM
REGISTER ⌐1016

END ⌐1022

Fig.12

36

Fig.13

FIG.14

CHECK A/D BACKGROUND
CONVERSION COMPLETE
FLAG
⌐870

IS
CONVERSION ⌐872
COMPLETE FLAG    NO
SET
?

YES ⌐874

STORE BACKGOUND
A/D CONVERSION

⌐878
CHECK BACKGROUND
FUNCTION A/D
MUX PTR

IS ⌐880
POINTER
TO LAST BACKGROUND    YES
FUNCTION
?

NO ⌐884

⌐882
RESET QUEUE
PTR TO FIRST
FUNCTION

INCREMENT BACKGROUND
POINTER

⌐886
SCHEDULE NEXT
BACKGOUND CONVERSION
IN QUEUE

⌐876
CONTINUE MONITOR
CONTROL LOOP
EXECUTION
EXIT

*FIG.15*